# EUROPEAN PATENT SPECIFICATION

(11) **EP 2 642 161 B1**
(45) Date of publication and mention of the grant of the patent: **24.06.2020**
(21) Application number: 11841142.0
(22) Date of filing: 31.03.2011
(51) Int. Cl.: F16H 25/22

(54) **BALL SCREW**
KUGELSCHRAUBE
VIS SPHÉRIQUE

(30) Priority: 15.11.2010 JP 2010255390; 16.11.2010 JP 2010256268; 25.11.2010 JP 2010262333; 26.11.2010 JP 2010264141; 30.11.2010 JP 2010266374; 15.12.2010 JP 2010279354; 07.01.2011 JP 2011001885
(43) Date of publication of application: 25.09.2013
(73) Proprietor: NSK Ltd., Tokyo 141-8560 (JP)
(72) Inventor: YOKOYAMA, Shouji, Hanyu-shi Saitama 348-8506 (JP); HASHIMOTO, Koji, Fujisawa-shi Kanagawa 251-8501 (JP); HARADA, Toru, Fujisawa-shi Kanagawa 251-8501 (JP); SAITOU, Shingo, Fujisawa-shi Kanagawa 251-8501 (JP)
(74) Representative: Klingseisen, Franz
(86) International application number: PCT/JP2011/001973
(87) International publication number: WO 2012/066693

(56) References cited:
- DE-A1- 3 930 900
- JP-A- 2004 003 631
- JP-A- 2006 022 848
- JP-A- 2006 349 058
- JP-A- 2008 157 374
- JP-A- 2010 112 430
- US-A1- 2009 064 811

## Description

### Technical Field

The present invention relates to a ball screw having a groove shaped ball return passage (ball circulation groove).

### Background Art

A ball screw is provided with: a threaded shaft having a spiral threaded groove (hereinafter also sometimes referred to as a "spiral groove") at its outer circumferential surface; a nut havi.ng a threaded groove which faces the threaded groove of the threaded shaft at its inner circumferential surface; a plurality of balls rotatably loaded in a spiral ball raceway constituted by the two threaded grooves (hereinafter also sometimes referred to as a "raceway") ; and a ball return passage for returning and circulating the balls from an end point to a start point of the ball raceway (hereinafter also sometimes referred to as a "ball circulation groove" or "ball circulation passage"). Further, when the nut screwed onto the thread shaft via the balls move by rotating relative to the threaded shaft, the threaded shaft and nut move relative to each other in the axial direction via the rolling of the balls.

Such a ball screw is used not only as positioning devices of general industrial machinery, but also as electric powered actuators mounted in automobiles, motorcycles, ships, and other vehicles. As ball circulation types using ball return passages, there are the circulation tube type, deflector type, etc In the case of the deflector type, a deflector in which a concaved part constituting the ball return passage (groove-shaped ball return passage) is formed is fit in the through hole of the nut. In contrast, if the groove-shaped ball return passage (often called the "ball circulation groove") is directly formed at the inner circumferential surface of the nut, the trouble and cost of assembly can be reduced and an improvement in the reliability of ball circulation can be expected.

Patent Document 1 describes, as a method of producing a ball screw in which a ball circulation groove is directly formed at an inner circumferential surface of the nut, directly forming the circulation groove (ball circulation groove) at the inner circumferential surface of the nut blank by plastic working, then cutting a female threaded groove (ball rolling groove).

Patent Document 2 describes providing one end part of the nut in the axial direction with a coaxial ring-shaped ball circulation part which is integral with the nut and providing this ball circulation part with a ball circulation groove.

Patent Document 3 describes making the cross-sectional shape, perpendicular to the ball advancing direction, of a circulation groove (ball circulation groove) having a groove bottom and a pair of side surfaces a shape in which the side surfaces spread wider in the direction away from the groove bottom. It is described that due to this, it is possible to set the clearance between the circulation groove and the balls small and keep down snaking motion of the balls and steps between the circulation groove and the threaded shaft, so it is possible to keep down abnormal noise and vibration and ensure smooth motion.

Patent Document 4 describes providing a ball circulation groove at the threaded shaft and making the ball circulation groove as a whole a gentle wavy shape in the radial direction and making the connecting parts with the threaded groove of the threaded shaft, shapes without extremely sharp edges. Due to this, balls can smoothly enter and exit between the threaded groove of the threaded shaft and the ball circulation groove.

### Prior Art Documents

### Patent Documents

Patent Document 1: JP 2008-281063 A
Patent Document 2: JP 2004-108538 A
Patent Document 3: JP 2008-267523 A
Patent Document 4: JP 2003-166616 A
Patent Document 5: JP 2007-146874 A
Patent Document 6: JP 2008-281064 A
Patent Document 7: JP 2000-297854 A
Patent Document 8: JP 2003-183735 A
Patent Document 9: JP 2006-90437 A
Patent Document 10: JP 2007-92968 A
Patent Document 11: JP 2010-138951 A
Patent Document 12: JP 1999-210859 A
Patent Document 13: JP 2005-299754 A
Patent Document 14: JP 2004-3631 A

In a further prior art according to DE 39 30 900 A1, a ball screw device with a specific form of recirculation part is disclosed, in which the cross-section of the ball raceway in the recirculation part is of an oval profile and has an incurved form.

In US 2009/064811 A1, a ball screw device is described, which is capable of downsizing a nut member and simplifying a circulation structure for balls. The cross-sectional shape in a boundary of the ball returning groove is a Gothic arc shape in order to avoid problems during the recirculation of the balls.

### Summary of Invention

### Problems to be Solved

In the methods described in Patent Documents 1 to 4, there is room for further improvement in the point of improving the durability, ball circulation performance, and working performance of a ball screw having a groove-shaped ball return passage (ball circulation groove).

The object of this invention is to further improve the durability, ball circulation performance, and working performance of a ball screw having a groove-shaped ball return passage (ball circulation groove). It is a further object of the invention to provide a ball screw having an extended maximum lifetime while requiring less maintenance work. Furthermore, the continuous operation of the ball screw without problems in view of the lubrication is to be provided by the invention without complicate constructions or components being required.

### Solution to Problem

The problem is solved by means of a ball screw with the features of claim 1. Preferred forms of realization of the invention are defined in the dependent claims.

### Advantageous Effects of Invention

The ball screw of the present invention is excellent in durability, ball circulation performance, and working performance.

### Brief Description of the Drawings.

FIG. 1 is a side view illustrative of a first example according to a first embodiment of a ball screw;
FIG. 2 is a perspective view illustrative of a deflector constituting the ball screw of FIG. 1;
FIG. 3 is a cross-sectional view taken along A-A of FIG. 1;
FIG. 4 is a side view illustrative of a second example according to the first embodiment;
FIG. 5 is a cross-sectional view taken along A-A of FIG. 4;
FIG. 6 is a perspective view illustrative of components of a die which is used in one example of the method of producing the nut of FIG. 5;
FIG. 7 is a view for describing a function of a ball circulation groove;
FIG. 8 is a view for describing behavior of a ball at a part A and a part B of FIG. 7;
FIG. 9 is a cross-sectional view for describing a second embodiment of a ball screw;
FIG. 10 is a cross-sectional view of principal parts of a nut;
FIG. 11 is an enlarged cross-sectional view of a ball circulation passage;
FIG. 12 is an enlarged view of a concaved groove of a nut when viewed from an arrow A direction of FIG. 10;
FIG. 13 is a cross-sectional view of a concaved groove illustrative of a cross-sectional shape of an end part of a ball circulation passage;
FIG. 14 is a cross-sectional view of a concaved groove illustrative of a cross-sectional shape of an intermediate part of a ball circulation passage;
FIG. 15 is a cross-sectional view of a threaded groove illustrative of a cross-sectional shape of a ball raceway;
FIG. 16 is a process diagram for describing a method of producing a ball screw;
FIG. 17 is a cross-sectional view of a nut for describing a boundary part of a ball circulation passage and a ball raceway;
FIG. 18 is an enlarged cross-sectional view of a nut illustrative of a deburred boundary part;
FIG. 19 is a view for describing a deburring step by brushing;
FIG. 20 is a view for describing a deburring step by blasting;
FIG. 21 is an enlarged cross-sectional view illustrative of a step which is formed at a boundary part of a nut and deflector in a conventional deflector type ball screw;
FIG. 22 is a view for describing one example of a method of manufacturing a nut used for a ball screw according to a fourth embodiment;
FIG. 23A is a plan view illustrative of a mating state of a cam slider and cam driver which form a die which is used in an example of the method of manufacturing a nut used for a ball screw according to the fourth embodiment, FIG. 23B is a perspective view illustrative of a cam slider, and FIG. 23C is a perspective view illustrative of a cam driver;
FIG. 24A and FIG. 24B are views for describing one example of a method of manufacturing a nut used for a ball screw according to the fourth embodiment, wherein FIG. 24A is a perspective view illustrative of the state of cutting a nut blank and FIG. 24B is a view of the nut blank and a cutting tool when viewed in the arrow VA direction shown in FIG. 24A;
FIG. 25A and FIG. 25B are views for describing an example of the method of manufacturing a nut used for a ball screw according to a fourth embodiment, wherein FIG. 25A is a cross-sectional view in the axial direction after cutting a nut blank, and FIG. 25B is a perspective view after cutting a nut blank;
FIG. 26 is a view for describing a method of manufacturing a conventional nut used for a ball screw;
FIG. 27 is a cross-sectional view for describing a method of manufacturing a ball screw according to a fifth embodiment where the inner circumferential surface of the nut is hardened by induction heat treatment;
FIG. 28 is a cross-sectional view of a ball circulation passage illustrative of the state of formation of an effective hardened layer;
FIG. 29 is an enlarged view of a concaved groove of a nut of a ball screw of a first example according to a sixth embodiment when viewed from the arrow A direction of FIG. 10;
FIG. 30 is an enlarged view of a concaved groove of a ball screw of a second example according to the sixth embodiment when viewed from the arrow A direction of FIG. 10;
FIG. 31 is an enlarged view of a concaved groove of a ball screw of a third example according to the sixth embodiment when viewed from the arrow A direction of FIG. 10;
FIG. 32 is an enlarged view of a concaved groove of a conventional ball screw when viewed from the arrow A direction of FIG 10;
FIG. 33 is an enlarged view of a concaved groove and a concaved part of a nut of a ball screw of a first example according to an embodiment of the invention when viewed from the arrow A direction of FIG. 10;
FIG. 34 is a cross-sectional view of the concaved groove taken along B-B of FIG. 33;
FIG. 35 is an enlarged view of a concaved groove and a concaved part of a ball screw of a second example according to the embodiment of the invention when viewed from the arrow A direction of FIG. 10;
FIG. 36 is a cross-sectional view of the concaved groove and a concaved part taken along C-C of FIG. 35;
FIG. 37 is a cross-sectional view of the concaved groove and a concaved part taken along D-D of FIG. 35;
FIG. 38 is an enlarged view of a concaved groove and a concaved part of a ball screw of a third example not in accordance with the invention when viewed from the arrow A direction of FIG. 10; and
FIG. 39 is a partial cross-sectional view of a steering gear of an electric power steering system.

### Description of Embodiments

Embodiments of a ball screw will be described in detail with reference to the drawings,

### (First Embodiment)

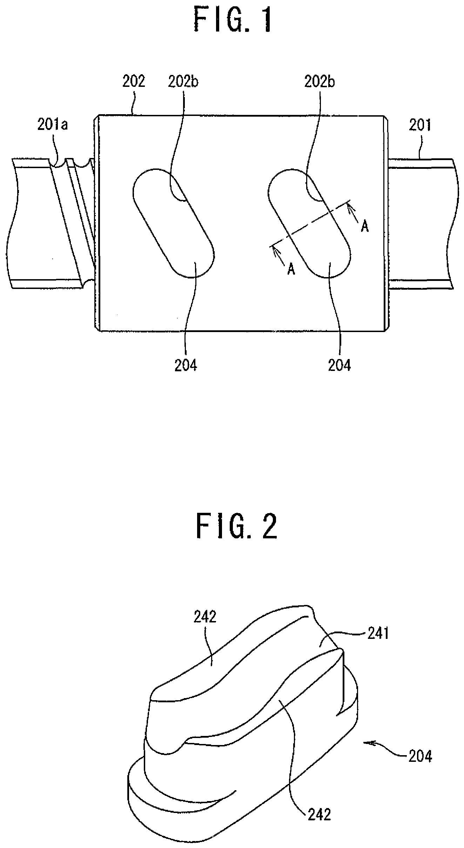

As shown in FIGS. 1 to 3, a ball screw of a first example according to a first embodiment is provided with a threaded shaft 201, a nut 202, balls 203, and a deflector 204. The outer circumferential surface of the threaded shaft 201 is formed with a spiral groove 201a. The inner circumferential surface of the nut 202 is formed with a spiral groove 202a Deflectors 204 are respectively fit in through holes 202b which pass through the nut 202 in the radial direction. The balls 203 are arranged in the raceway constituted by the spiral groove 202a of the nut 202 and the spiral groove 201a of the threaded shaft 201.

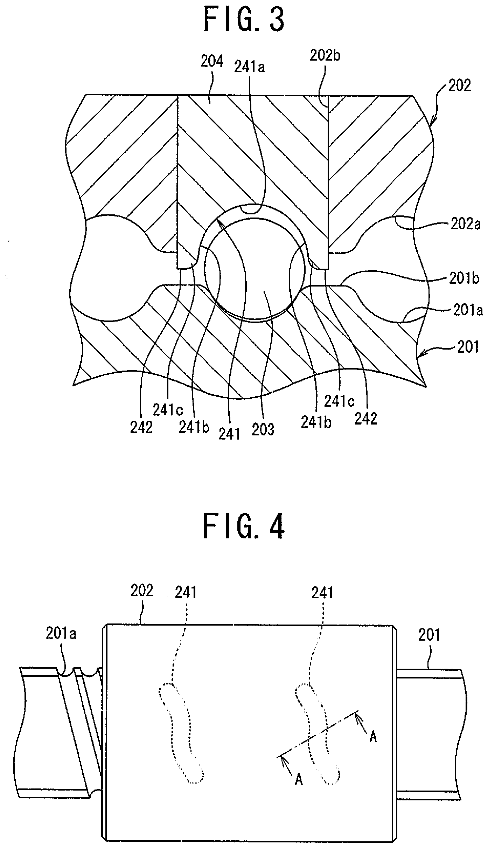

As shown in FIGS. 2 and 3, each deflector 204 is formed with a circulation groove 241 which returns balls 203 from an end point to a start point of the raceway. The ball circulation groove 241 formed at the deflector 204, as shown in FIG. 3, has a groove bottom 241a and a pair of side surfaces 241b connected to the groove bottom 241a. The edge portions 241c between the two side surfaces 241b of the ball circulation groove 241 and the surface 242 connected with the side surfaces 241b and extending in the axial direction are formed rounded.

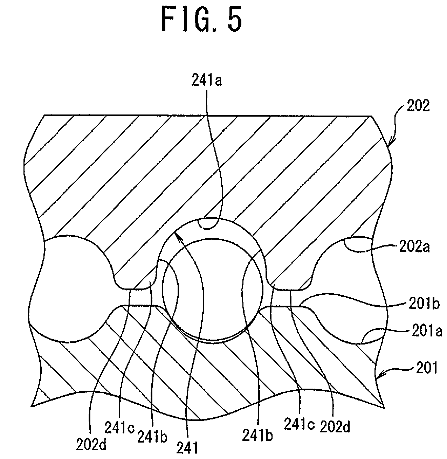

In a ball screw of a second example according to the first embodiment, shown in FIGS. 4 and 5, the ball circulation groove 241 is directly formed at an inner circumferential surface 202d of the nut 202. The nut 202 is not formed with the through holes 202b such as in FIG. 1 and does not have a deflector 204.

As shown in FIG. 5, the ball circulation groove 241 formed at the inner circumferential surface 202d of the nut 202 has a groove bottom 241a and a pair of side surfaces 241b connected to the groove bottom 241a. The edge portions 241c of the two side surfaces 241b of the ball circulation groove 241 and the surface 202d connected with the side surfaces 241b and extending in the axial direction (inner circumferential surface of nut 202) are formed rounded.

According to the ball screws of the first example and second example, since the edge portions 241c of the ball circulation groove 241 are formed rounded, as compared with ones which are not formed rounded, when the balls 203 circulate, the surfaces of the balls 203 are hardly scratched or dented and the edge portions 241c of the ball circulation groove 241 are hardly chipped. Accordingly, the durability is improved.

Further, the balls 203 which advance through the ball circulation groove 241 can move smoothly even when going beyond an outer circumferential surface (land portion) 201b of the threaded shaft 1, so the ball circulation performance is improved. Furthermore, since the edge portions 241c of the ball circulation groove 241 are formed rounded, almost no burrs form at the edge portions 241c. Accordingly, the later step of deburring can be eliminated, so the working performance is improved.

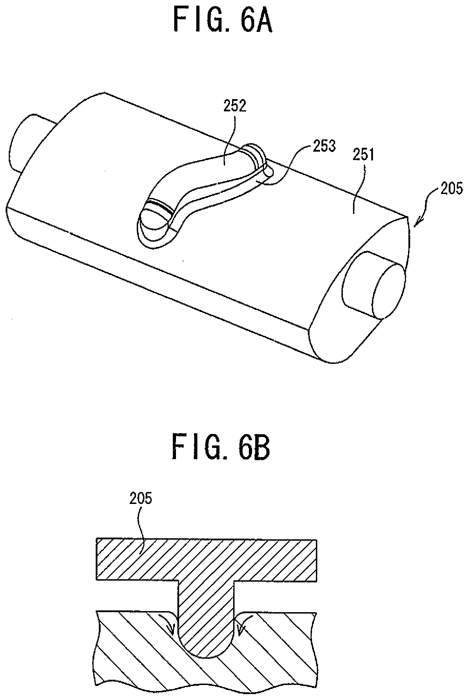

The nut 202 at which the ball circulation groove 241 with the round edge portions 241c directly formed shown in FIG. 5 can be produced by, for example, working the inner circumferential surface of a cylindrical blank which is produced from a nut blank by plastic working using a die 205 such as shown in FIG. 6A so as to form the ball circulation groove, then forming a ball rolling groove by cutting so as to connect the two ends of this ball circulation groove. The die 205 which is shown in FIG. 6A is formed at a surface 251 of a base part with projections 252 and 253 to correspond to the ball circulation groove 241, The first projection 252 constitutes the groove bottom 241a and side surfaces 241b of the ball circulation groove 241, and the second projection 253 constitutes the roundness of the edge portions 241c.

As another method of directly forming the ball circulation groove 241 with the round edge portions 241c in the nut 202, there are : a method of using a conventional method to directly form a ball circulation groove 241 with sharp edge portions at the nut 202, then using a media blasting method such as shot blasting to round the sharp edge portions; and a method of, as shown in FIG. 6B, using a die 205 with no second projections 253 for utilizing plastic flow motion to round the edge portion.

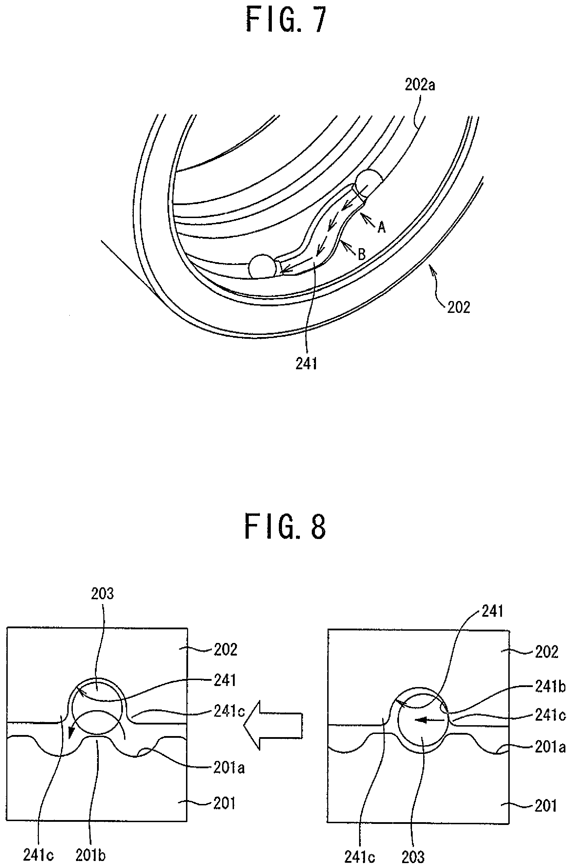

The ball circulation groove 241, as shown in FIG. 7, is connected to the spiral groove 202a of the nut 202. At a ball entry side (part A) of the ball circulation groove 241, as shown in the right view of FIG. 8, balls 203 enter the ball circulation groove 241 from the spiral groove 202a, hit the side surfaces 241b of the ball circulation groove 241, and receive a force in the arrow direction. The balls 203 to which such a force is applied ride over an outer circumferential surface (land portion) 201b of the threaded shaft 201 at the center part (part B) of the ball circulation groove 241, as shown in the left view of FIG. 8, and then move to the adjacent spiral groove 202a. Accordingly, the degree of roundness of the edge portions 241c has to be set to a range such that a force applied to the balls 203 can smoothly ride over a land part 201b of the threaded shaft 201.

In addition, as shown in Patent Document 2, one end part of the nut in the axial direction may be provided with a coaxial ring-shaped ball circulation part integrally formed with the nut, this ball circulation part may be provided with the ball circulation groove, and the edge portions between the two side surfaces of this ball circulation groove and the surface connected with the side surfaces and extending in the axial direction may be form rounded. This further improves the durability, ball circulation performance, and working performance of the ball screw,

Further, as shown in Patent Document 3, the cross-sectional shape, perpendicular to the ball advancing direction, of the circulation groove (ball circulation groove) having the groove bottom and the pair of side surfaces may be made to have a shape in which the side surfaces spread wider in the direction away from the groove bottom, then the edge portions of the two side surfaces of the ball circulation groove and the surface connected with the two side surfaces and extending in the axial direction may be formed rounded. This further improves the durability, ball circulation performance, and working performance of the ball screw.

Furthermore, when a ball circulation groove is formed by plastic working using a die at the inner circumferential surface of a cylindrical blank produced from a nut blank, the edge portions between the two side surfaces of this ball circulation groove (flange at flange-forming part) and the surface connected with the side surfaces and extending in the axial direction may be formed to be rounded at a ball screw with a flange projecting out at the periphery of the ball circulation groove at the inner circumferential surface (Japanese Patent Application No.. 2009-226241). This further improves the durability, ball circulation performance, and working performance of the ball screw.

Moreover, even when the ball circulation groove is formed not at the nut, but at the threaded shaft, a similar effect can be obtained by forming the edge portions between the two side surfaces of this ball circulation groove and the surface which is connected to the side surfaces and extend in the axial direction rounded.

### (Second Embodiment)

A second embodiment relates to a ball screw.

The ball screw is provided with: a threaded shaft having a spiral threaded groove at its outer circumferential surface; a nut having a threaded groove which faces the threaded groove of the threaded shaft at its inner circumferential surface; and a plurality of balls rotatably loaded in a spiral ball raceway constituted by the two threaded grooves. Then, when the nut engaged with the threaded shaft via the balls and the threaded shaft are made to rotate relatively, the threaded shaft and nut move relative to each other in the axial direction via rolling of the balls.

Such a ball screw is provided with: a ball circulation passage which connects a start point and an end point of a ball raceway to form an endless ball passage. That is, the balls rotate around the threaded shaft, while moving through the ball raceway. When the balls reach the end point of the ball raceway, they are scooped up from one end part of the ball circulation passage, pass through the ball circulation passage ball, and are returned from the other end part of the ball circulation passage to the start point of the ball raceway. In this way, the balls which roll through the ball raceway are endlessly circulated in the ball circulation passage, so that the threaded shaft and nut can continuously move relative to each other,

As a shape of the ball circulation passage in such a ball screw, for example, as disclosed in Patent Document 3, the cross-sectional shape of a substantially letter U shape is known in the case of cutting along the plane perpendicular to the length direction of the ball circulation passage.

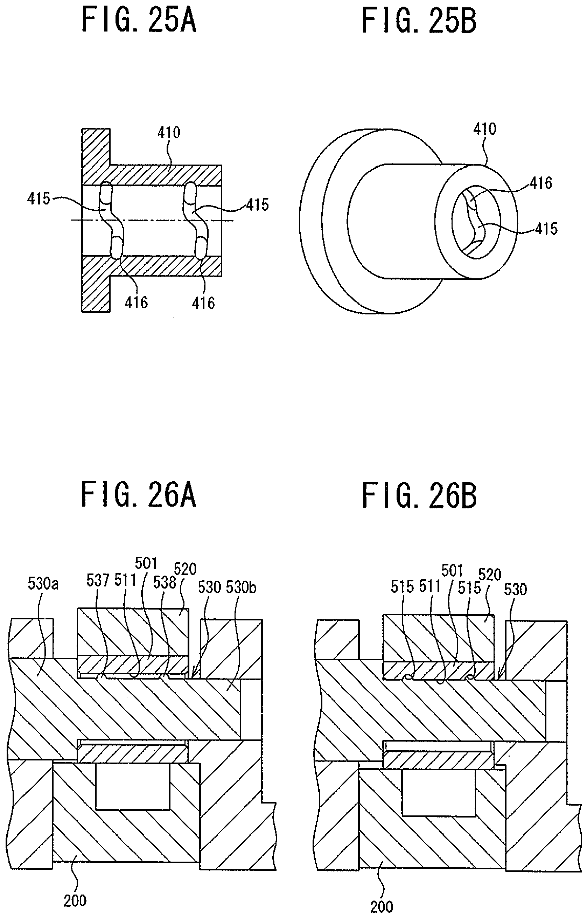

As in the method of Patent Document 1 (method shown in FIG. 26 to be described later), however, when forging with the use of a die is used to concave a part of the inner circumferential surface of the nut to form a concaved groove, concaved groove to constitute a ball circulation passage with the concaved groove, a ball circulation passage with a cross-sectional shape being a substantially letter U shape tends to need massive energy for forging. That is, a projecting part of a die is brought into contact with an inner circumferential surface of a nut blank and strongly pressed into it for plastic working to form a concaved groove, but when a ball circulation passage is formed with a cross-sectional shape being a substantially letter U shape, the angle of abutment between the front end part of the projecting part of the die and the nut blank is large at the time of forging and massive energy tends to be needed for forging. Accordingly, further improvement is demanded so that the energy needed for formation of the ball circulation passage becomes smaller.

Therefore, the second embodiment has as its object to solve the problem of the above prior art and to provide a ball screw with smaller energy needed for manufacture.

To solve the above problem, the second embodiment includes the following configuration. That is, the ball screw according to the second embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns the balls from an end point to a start point of the ball raceway and circulates. In the ball screw, the ball circulation passage is provided with a concaved groove formed by concaving a part of the inner circumferential surface of the nut and at least a part of the ball circulation passage in a length direction of the ball circulation passage has a cross-sectional shape of a substantially letter V shape in the case cutting along a plane perpendicular to the length direction.

In such a ball screw according to the second embodiment, preferably the ball circulation passage includes both of the end parts that are parts connected with the ball raceway and an intermediate part between the both of the end parts, and at least one of the intermediate part and the end parts has a cross-sectional shape of a substantially letter V shape in the case of cutting along a plane perpendicular to the length direction of the ball circulation groove. Additionally, the bottom part of the concaved groove constituting the ball circulation passage is preferably provided with a lubricant reservoir.

In the ball screw according to the second embodiment, at least part of the ball circulation passage in the length direction have a cross-sectional shape of a substantially letter V shape in the case of cutting along a plane perpendicular to the length direction of the ball circulation groove, so the energy needed for manufacture is smaller.

The ball screw according to the second embodiment will be described in detail with reference to the drawings.

### (First Example)

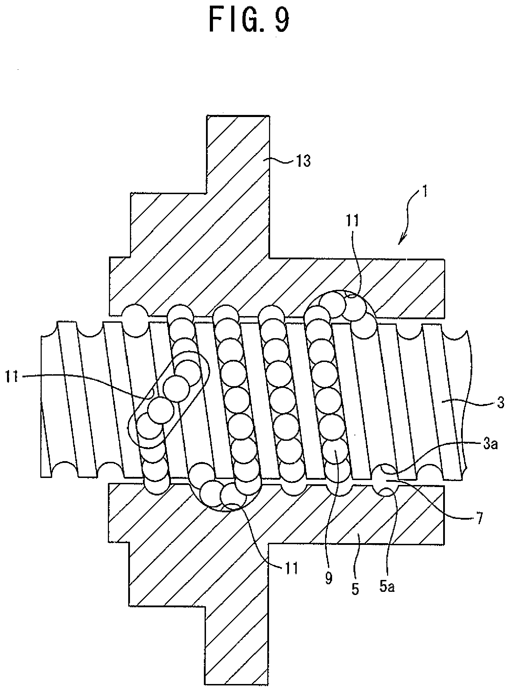

FIG. 9 is a cross-sectional view for describing the structure of a ball screw of a first example according to the second embodiment (cross-sectional view cut along a plane in the axial direction).

As shown in FIG. 9, the ball screw 1 is provided with: a threaded shaft 3 having a spiral threaded groove 3a at its outer circumferential surface; a nut 5 having a spiral threaded groove 5a which faces the threaded groove 3a of the threaded shaft 3 at its inner circumferential surface; a plurality of balls 9 loaded rotatably in a spiral ball raceway 7 constituted by the two threaded grooves 3a and 5a; and a ball circulation passage 11 which returns and circulates the balls 9 from an end point to a start point of the ball raceway 7.

That is, the balls 9 rotate around the threaded shaft, while moving through the ball raceway 7, When the balls 9 reach the end point of the ball raceway 7, they are scooped up from one end part of the ball circulation passage 11, pass through the ball circulation passage 11, and are returned from the other end part of the ball circulation passage 11 to the start point of the ball raceway 7.

Note that, the cross-sectional shape of the threaded grooves 3a and 5a (shape of cross-section in the case of cutting along a plane perpendicular to length direction) may have an arc shape (single arc shape) or gothic arc shape. Further, the materials of the threaded shaft 3, nut 5, and balls 9 are not particularly limited. General materials can be used. For example, a metal (steel etc.), sintered alloy, ceramic, and resin may be used.

Such a ball screw 1 is designed so that when the nut 5 screwed on the threaded shaft 3 via the balls 9 and the threaded shaft 3 are made to rotate relatively, the threaded shaft 3 and nut 5 move relatively in the axial direction via rolling of the balls 9. Further, the ball raceway 7 and the ball circulation passage 11 form an endless ball passage and the balls 9 which roll through the ball raceway 7 endlessly circulate through the endless ball passage, so the threaded shaft 3 and the nut 5 can continuously move relative to each other.

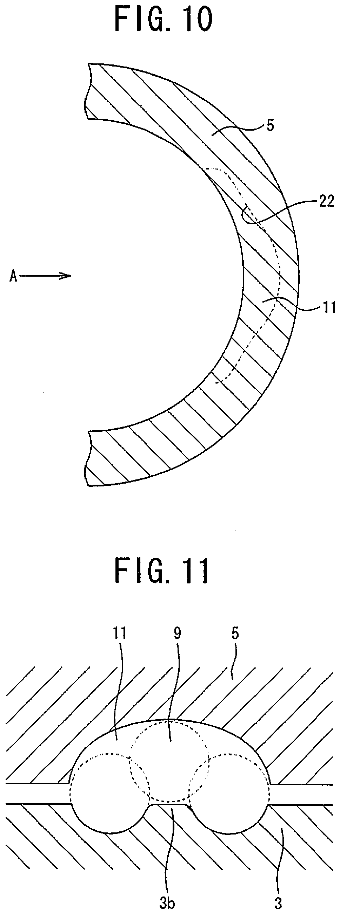

Here, the ball circulation passage 11 will be described in detail with reference to the cross-sectional views of FIGS. 10 and 11 (cross-sectional views cut along a plane perpendicular to the axial direction). The ball circulation passage 11 is formed integrally with the inner circumferential surface of the nut 5. To be described in detail, a part of the columnar shaped inner circumferential surface of the nut 5 is concaved by plastic working (for example, the later described method of forging using a die) to form a concaved groove 22 to be used as the ball circulation passage 11. Accordingly, unlike the case of a tube type, deflector type, or other ball circulation type, no separate member for constituting the ball circulation passage is attached. Further, since no separate member is used, there is no possibility of forming a step produced at the boundary when a separate member is used.

As shown in FIG. 11, the balls 9 which roll to the end point of the ball raceway 7 are scooped up from one end part of the ball circulation passage 11 and sink to the inside of the nut 5 (outside in radial direction). Further, they pass through the ball circulation passage 11 and ride over the land part 3b of the threaded shaft 3 (thread of threaded groove 3a) then are returned from the other end of the ball circulation passage 11 to the start point of the ball raceway 7.

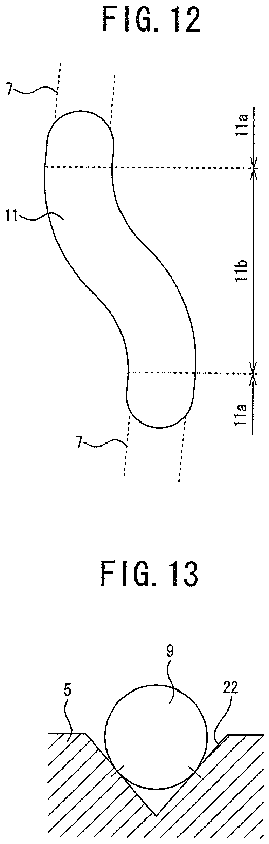

Further, as shown in FIG 12, in the ball circulation passage 11 (concaved groove 22), the both of end parts 11a for connecting the ball raceway 7 (threaded groove 5a) are each straight in shape and the intermediate part 11b positioned between the both of the end parts 11a is curved in shape. The two ends of this intermediate part 11b and the both of the end parts 11a are smoothly connected so that the overall shape of the ball circulation passage 11 (concaved groove 22) as seen from the arrow A direction of FIG. 10 forms a substantially letter S shape. However, the overall shape of the ball circulation passage 11 is not limited to a substantially letter S shape such as shown in FIG. 12.

A straight-shaped end part 11a is used to constitute an entry part of the balls 9. The balls 9 which enter from the ball raceway 7 to the ball circulation passage 11 pass through the entry part and hit the curved part of the intermediate part 11b to be guided and changed in direction of advance. Accordingly, this entry part is the part which the balls 9 intensely hit. It should be noted that the ball circulation passage 11 and the ball raceway 7 are connected for smoothly. That is, the trajectory at the connecting point of the balls 9 and the inner surface of the concaved groove 22 and the trajectory at the connecting point of the balls 9 and the threaded groove 5a are connected for smoothly. As a result, the balls 9 smoothly circulate.

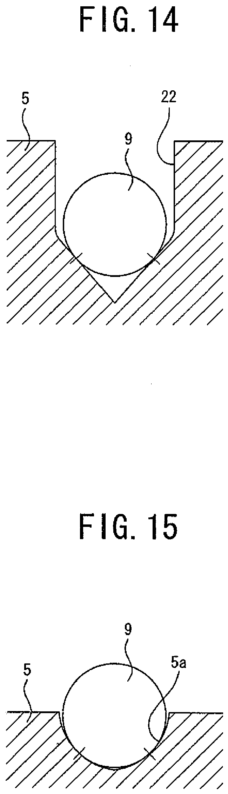

Furthermore, the shape of the ball circulation passage 11 will be described in detail with reference to FIGS. 12 to 15. FIG. 13 is a cross-sectional view of a concaved groove 22 illustrative of the cross-sectional shape of the end parts 11a of the ball circulation passage 11. FIG. 14 is a cross-sectional view of a concaved groove 22 illustrative of the cross-sectional shape of the intermediate part 11b of the ball circulation passage 11 , In addition, FIG. 15 is a cross-sectional view of a threaded groove 5a illustrative of the cross-sectional shape of the ball raceway 7. Each cross-sectional view is a cross-sectional view in the case of cutting along the plane perpendicular to the length direction of the ball circulation passage 11 or ball raceway 7.

In the ball screw 1 of the first example, the cross-sectional shape of the ball circulation passage 11 which extends in the substantial circumferential direction of the nut 5 (cross-sectional shape in the case of cutting along a plane perpendicular to length direction of ball circulation passage 11) has a letter V shape in the overall length direction. As an example, the cross-sectional shape of the end parts 11a of the ball circulation passage 11 is shown in FIG. 13. As will be understood from FIG. 13, the cross-sectional shape of the end parts 11a is a letter V shape including two lines intersecting each other.

When a ball circulation passage 11 having a cross-sectional shape of a letter V shape is formed, as compared with the case of forming a ball circulation passage having a cross-sectional shape of an arc shape or a substantially letter U shape, the abutting angle between the front end part of the projecting part of the die (front end of the letter V-shaped projecting part) and nut blank at the time of forging is small, so that cold forging becomes easy. In addition, the energy needed for forging becomes much smaller. Accordingly, the energy needed for producing the ball screw 1 is small. To obtain this effect stronger, preferably the angle constituted by the letter V-shaped part (angle formed by two intersecting straight lines) is equal to or greater than 90 degrees,

However, there is no need for the cross-section to be a letter V shape produced by the two lines which extend from the bottom part of the concaved groove 22 to the inner circumferential surface of the nut 5. The two lines may also be bent in the partway for a cross-sectional pentagonal shape. That is, the cross-sectional shape need not be a letter V shape as a whole . Only the part near the bottom part of the concaved groove 22 may need be a cross-sectional letter V shape. As an example, the cross-sectional shape of the intermediate part 11b of the ball circulation passage 11 is shown in FIG. 14. The cross-sectional shape such as FIG. 14 has the width of the concaved groove 22 becomes smaller than the case of the letter V shape such as in FIG. 13. Therefore, the amount of excess material at the time of forging can be reduced Accordingly, the energy needed for forging becomes smaller. It should be noted that, the concaved groove 22 of FIG. 14 has a part near the bottom part having a cross-sectional letter V shape and has a part near the opening part having a cross-sectional rectangular shape, but the part near the opening part may also be a cross-sectional trapezoidal shape.

Further, the cross-sectional shape of the ball circulation passage 11 is a letter V shape, as understood by FIGS. 13 and 14, the balls 9 are in contact with and are supported at two points with the inner surface of the concaved groove 22. As a result, the behaviors of the balls 9 in the ball circulation passage 11 become stable,

Furthermore, since the cross-sectional shape of the ball circulation passage 11 is a letter V shape, a space surrounded by the inner surface of the concaved groove 22 and the balls 9 is formed at the bottom of the concaved groove 22 constituting the ball circulation passage 11. This space can hold lubricants such as lubricating oil or grease, so the space functions as a lubricant reservoir.

The lubricant held at the lubricant reservoir is suitably fed to the balls 9 during use of the ball screw 1, so the lubricant adheres to the surface of the balls 9 in the ball circulation passage 11 and reaches the ball raceway 7 together with the balls 9 so as to be used for lubricating the surfaces of the threaded grooves 3a and 5a and balls 9. Accordingly, the ball screw 1 becomes excellent in lubricity and long in life. Further, as the ball screw 1 is lubricated by the lubricant held in the lubricant reservoir, the frequency of the maintenance work for supplying lubricant inside the ball screw 1 can be reduced.

The applications of the ball screw 1 of such a first example are not particularly limited, but the ball screw 1 can be suitably used for an automobile part, positioning device,

Next, one example of a method of manufacturing a ball screw 1 of the first example will be described with reference to FIGS, 16 and 17. First, a columnar-shaped steel blank 20 is worked by cold forging or another type of plastic working to obtain a blank 21 of about the same shape as the nut 5 (substantially cylindrical shape) (rough forming process). At this time, plastic working is used to form a flange 13 at the outer circumferential surface of the blank 21.

Next, a part of the inner circumferential surface of the columnar shape of the blank 21 is concaved by cold forging or another type of plastic working to form the concaved groove 22 of a substantially letter S shape constituting a ball circulation passage 11 for connecting the end point and start point of the ball raceway 7 (ball circulation passage forming process)

As a specific example of the method of forming the concaved groove 22, the following method can be mentioned, That is, a die (not shown) having a projecting part with a shape corresponding to the concaved groove 22 is inserted into the blank 21, the projecting part of the die is brought into contact with the inner circumferential surface of the blank 21, and the die is strongly pressed against the inner circumferential surface of the blank 21 so as to form the concaved groove 22 by plastic working.

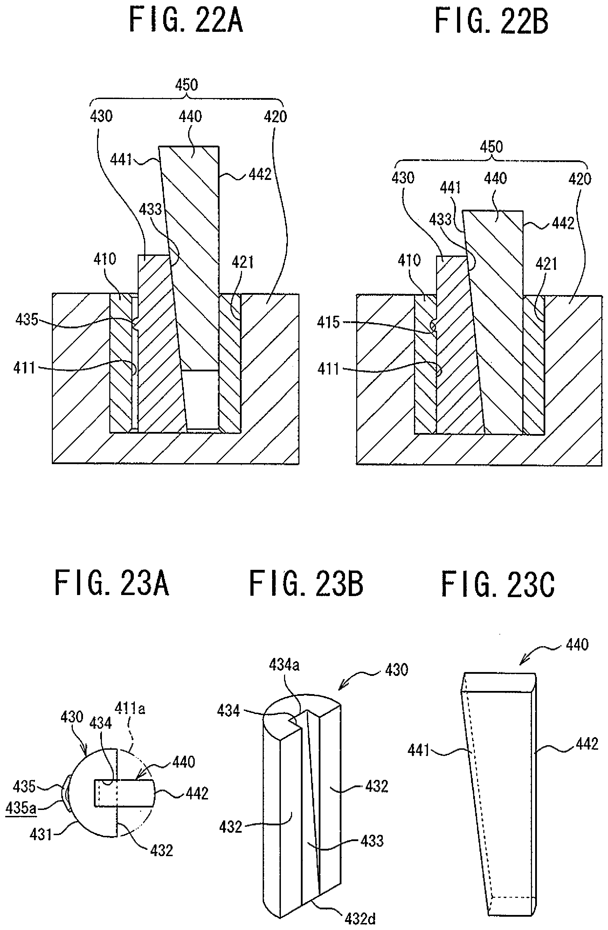

For example, as shown in FIG. 22 to be described later, a die of a cam mechanism having a cam driver and a cam slider having a projecting part with a shape corresponding to the concaved groove 22 may also be used to form the concaved groove 22. To be described in detail, the cam driver and cam slider are inserted into the blank 21. At that time, the cam slider is arranged between the blank 21 and the cam driver, and the projecting part is arranged to face the inner circumferential surface of the blank 21. The cam slider and the cam driver arranged inside the blank 21 are in contact with each other at the slanted surface extending in the substantial axial direction of the blank 21 (direction slightly slanted from axial direction of blank 21). The two slanted surfaces constitute the cam mechanism of the die.

Here, when the cam driver is made to move in the axial direction of the blank 21, the cam mechanism including the two slanted surfaces (wedge effect) is used to move the cam slider outward in the radial direction of the blank 21. That is, a force is transmitted from the slanted surface of the cam driver to the slanted surface of the cam slider. The force of the cam driver in the axial direction is converted to a force for moving the cam slider outward in the radial direction. As a result, the projecting part of the cam slider strongly presses against the inner circumferential surface of the blank 21, so the concaved groove 22 is formed at the inner circumferential surface of the blank 21 by plastic working. Note that, the method of Patent Document 1 (method shown in FIG. 26) may also be used for plastic working.

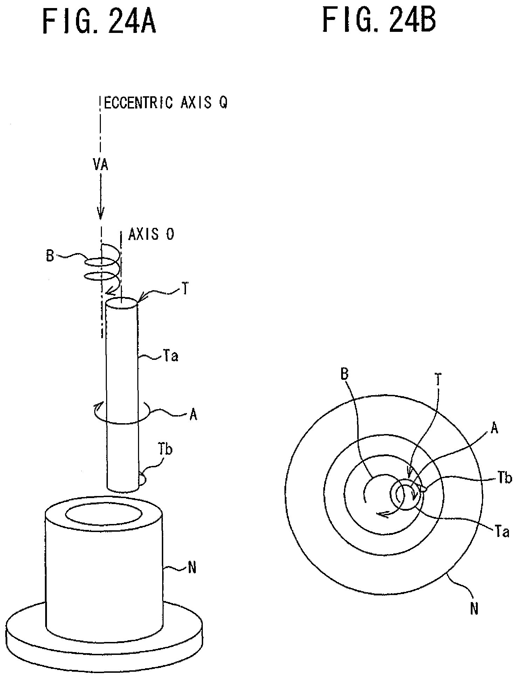

Next, the inner circumferential surface of the nut 5 is formed with a threaded groove 5a by commonly used cutting (for example, the method shown in FIG. 24 to be described later) to connected with the endmost part of the ball circulation passage 11 (concaved groove 22) (threaded groove forming process). At this time, since the endmost part of the concaved groove 22 (ball circulation passage 11) has a spherical shape, no edge part is formed at the step of the boundary part 30 with the threaded groove 5a, unlike the case of a deflector type ball screw. The step becomes smooth. As a result, even if the balls 9 pass through the boundary part 30, abnormal noise or fluctuations in operating torque seldom occurs, and a reduction in lifetime seldom occurs.

Finally, heat treatment such as hardening, tempering, and the like is conducted under desired conditions to obtain the nut 5. As examples of this heat treatment, carburizing, carbonitriding, induction heat treatment, etc. may be mentioned. When the heat treatment is carburizing or carbonitriding, the material of the nut 5 is preferably chrome steel or chrome molybdenum steel with a content of carbon of 0.10 mass% to 0.25 mass% (for example, SCM420), and when the heat treatment is induction heat treatment, the material is preferably carbon steel with a content of carbon of 0.4 mass% to 0.6 mass% (for example, S53C, SAE4150).

The nut 5 produced in this way and the threaded shaft 3 and balls 9 produced by the commonly used method are assembled to produce a ball screw 1.

Note that, as the above-mentioned rough forming process and the ball circulation passage forming process are performed by plastic working, this method of manufacturing a ball screw 1 is high material yield and also enables inexpensive manufacturing a ball screw with high accuracy, Further, since plastic working is used for production, the metal flow (fiber flow) of the steel blank 20 is hardly cut off. Moreover, work hardening occurs, so a nut 5 with high strength is obtainable.

The type of the plastic working is not particularly limited, but forging is preferable. In particular, cold forging is preferable. Hot forging can also be employed, but the cold forging enables finishing with higher accuracy that that of the hot forging Therefore, a nut 5 with sufficiently high accuracy is obtainable, without subsequent working. Accordingly, a ball screw 1 can be inexpensively produced. The plastic working in the rough forming process and the ball circulation passage forming process is preferably carried out by the cold forging, but the plastic working in any single process may also be carried out by the cold forging.

### (Second Example)

The configuration and operation and effect of the ball screw of a second example according to the second embodiment are similar to those of the first example, so only different parts will be described, and the description of similar parts will be omitted.

In the ball screw 1 of the first example, the cross-sectional shape of the ball circulation passage 11 has a letter V shape in the length direction as a whole. However, the cross-sectional shape of a part of the ball circulation passage 11 (one part of ball circulation passage 11 in length direction) may also be letter V-shaped, In the ball screw 1 of the second example, only the intermediate part 11b has a cross section with a letter V shape. The cross-sectional shapes of the both of the end parts 11a are arc shapes (single arc shapes) or gothic arc shapes. The intermediate part 11b where the amount of excess material is greatest at the time of forging has a cross-section with a letter V shape, so the energy needed for forging becomes significantly smaller.

### (Third Example)

The configuration and operation and effect of the ball screw of the third example according to the second embodiment are substantially the same as first example, so only different parts will be described, and the description of similar parts will be omitted.

In the ball screw 1 of the third example, unlike the case of the second example, the both of the end parts 11a have cross-sectional letter V shapes. The cross-sectional shape of the intermediate part 11b is an arc shape (single arc shape) or gothic arc shape.

An end part 11a constituting the entry part of the balls 9 is a part where the balls 9 move from a load zone to a non-load zone and is a part where the behaviors of the balls 9 are the most unstable. The cross-sectional shape of this part is a letter V shape. The balls 9 are supported by making contact with the inner surface of the concaved groove 22 at two points, so the behaviors of the balls 9 become stable,

Further, when the cross-sectional shape of the intermediate part 11b over which the balls 9 moves by sliding is made to have an arc shape or substantially letter U shape where the balls 9 are in contact with the inner surface of the concaved groove 22 at one point the wear loss of the balls 9 can be reduced.

Note that, the above first example to third example show examples according to the second embodiment. The second embodiment is not limited to the above first example to third example. For example, in the ball screws 1 of the first example to third example, the examples of forming the concaved groove 22 by forging have been shown, but another method other than forging may be used to concave a part of the columnar shaped inner circumferential surface of the blank 21 to form the concaved groove 22. For example, it is also possible to concave by removal process such as cutting, grinding, electrodischarge machining, etc. Alternatively, casting may be used to produce a blank 21 having a concaved groove 22 at the inner circumferential surface and make this concaved groove 22 be a ball circulation passage 11 When these methods are employed to form a concaved groove 22, the effect of the energy needed when manufacturing a ball screw 1 being small is not exhibited, but the effect of stable behavior of the balls 9 in the ball circulation passage 11 is exhibited..

Further, in the ball screw 1 of the first example to third example, a nut circulation type of ball screw provided with a ball circulation passage 11 for returning and circulating the balls 9 from an end point to start point of the ball raceway 7 at the nut 5 has been illustrated, but the second embodiment can also be applied to a threaded shaft circulation type of ball screw provided with one corresponding to the ball circulation passage 11 at the threaded shaft.

### (Third Embodiment)

A third embodiment relates to a method of manufacturing a ball screw,

The ball screw is provided with: a threaded shaft having a spiral threaded groove at its outer circumferential surface; a nut having a threaded groove which faces the threaded groove of the threaded shaft at its inner circumferential surface; and a plurality of balls rotatably loaded inside a spiral ball raceway constituted by the two threaded grooves. Further, when the nut screwed with the threaded shaft via the balls and the threaded shaft are made to rotate relatively, the threaded shaft and nut move relative to each other in the axial direction via rolling of the balls.

Such a ball screw is provided with a ball circulation passage for connecting a start point and end point of a ball raceway to form an endless ball passage. That is, the balls rotate around the threaded shaft, while moving through the ball raceway. When the balls reach the end point of the ball raceway, they are scooped up from one end part of the ball circulation passage, pass through the ball circulation passage ball, and are returned from the other end part of the ball circulation passage to the start point of the ball raceway. In this way, the balls which roll through the inside of the ball raceway are endlessly circulated by the ball circulation passage, so that the threaded shaft and nut can continuously move relative to each other,

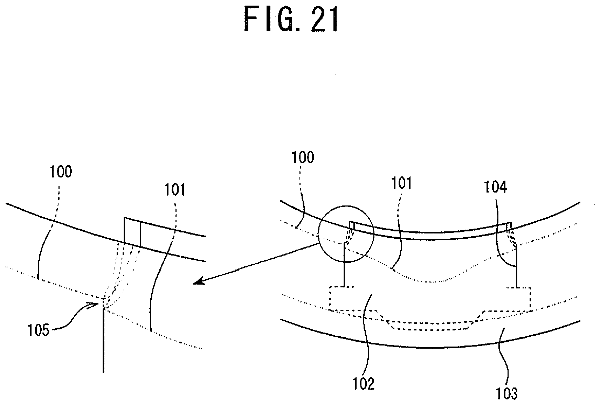

As the ball circulation type with the use of a ball circulation passage, the tube type, deflector type, etc. are generally employed In a deflector type ball screw, a deflector 102 provided with a circulation groove 101 constituting a ball circulation passage is fastened by being inserted into a deflector hole 104 formed in the nut 103. The nut 103 of such a deflector type of ball screw is produced by cutting a cylindrically shaped blank to form holes or work the inner and outer circumferential surfaces. Hence, the material yield is poor. Besides, the nut 103 and the deflector 102 are separate members, so variation in the dimensions of the nut 103 and the deflector 102 may form a step 105 having an edge part at the boundary part (see FIG. 21 illustrative of enlarged the periphery of the deflector 102 and deflector hole 104 and periphery of the step. Note that, the reference numeral 100 indicates a ball raceway.)

If a step having an edge part is formed at the boundary part of the nut and the deflector, abnormal noise and fluctuation in operating torque may be caused when balls pass through the boundary part. This causes a problem that the lifetime is shortened and the costs are increased due to maintenance. Further, when machining using a grindstone, end mill, etc. is carried out to smooth this step, abrasive grain, chip, or the like may remain between the deflector and deflector hole.

As a prior art to solve these problems, for example, Patent Document 6 can be mentioned. In Patent Document 6, before attaching the deflector to the nut, the location adjacent to the deflector hole at the threaded groove of the nut is treated by shot peening. Additionally, the circulation groove of the deflector is also treated by shot peening. However, the shot peening is high in cost, so there is a problem that the working costs are increased.

For this reason, in Patent Document 7, the nut is made of a sintered alloy, whereby the return groove constituting the ball circulation passage is formed integrally at the inner circumferential surface of the nut. That is, the nut and the ball circulation passage are not separate members, and are formed integrally, so the above-mentioned step having an edge part is never formed.

However, the nut of the ball screw described in Patent Document 7 is made of a sintered alloy, so there is a problem that the density is low, Further, due to the formation of pores, the strength of the nut is not sufficient as a nut for a ball screw, in some cases.

Therefore, according to the third embodiment, the above problems in the prior art are solved and there is provided a method of manufacturing a ball screw having little abnormal noise or fluctuations in operating torque and is long in life and inexpensive,

To solve this problem, the third embodiment is configured as follows. That is, the method of manufacturing a ball screw according to the third embodiment is a method of manufacturing a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns and circulates the balls from an end point to a start point of the ball raceway, and the method is provided with a ball circulation passage forming process for concaving a part of the inner circumferential surface of the nut to form the ball circulation passage provided with a concaved groove; a threaded groove forming process for forming the threaded groove at the inner circumferential surface of the nut to be connected with the end parts of the ball circulation passage; and a deburring process for carrying out at least one of brushing and blasting on a boundary part of the ball circulation passage and the ball raceway to remove burrs.

In the method of manufacturing a ball screw according to the third embodiment, at the ball circulation passage forming process, it is also possible to concave a part of the inner circumferential surface of the nut by forging to form the ball circulation passage provided with a concaved groove.

The method of manufacturing a ball screw according to the third embodiment is provided with a deburring process for removing the burrs generated at the boundary part of the ball circulation passage and ball raceway. Therefore, it is possible to inexpensively manufacture a ball screw with little abnormal noise or fluctuations in operating torque at the time the balls pass through the boundary part, and with a long lifetime.

An example of a method of manufacturing a ball screw according to the third embodiment will be described in detail with reference to the drawings. FIG. 9 is a cross-sectional view of one example of a ball screw according to the third embodiment (cross-sectional view cut along a plane in the axial direction).

As shown in FIG. 9, the ball screw 1 is provide with: a threaded shaft 3 having a spiral threaded groove 3a at the outer circumferential surface; a nut 5 having a spiral threaded groove 5a which faces the threaded groove 3a of the threaded shaft 3 at its inner circumferential surface; a plurality of balls 9 rotatably loaded in a spiral ball raceway 7 constituted by the two threaded grooves 3a and 5a; and a ball circulation passage 11 which returns and circulates the balls 9 from an end point to start point of the ball raceway 7.

That is, the balls 9 rotate around the threaded shaft 3, while moving through the raceway 7. When the balls 9 reach the end point of the ball raceway 7, they are scooped up from one end part of the ball circulation passage 11, pass through the ball circulation passage 11, and are returned from the other end part of the ball circulation passage 11 to the start point of the ball raceway 7.

Note that, the cross-sectional shape of the threaded grooves 3a and 5a may be an arc shape or a gothic arc shape.. Additionally, the materials of the threaded shaft 3, nut 5, and balls 9 are not particularly limited. General materials may be used. For example, a metal (steel etc.), ceramic, or resin may be employed. For example, when the nut 5 is made of a sintered alloy, there may be a problem of a low density or a problem that pores generated and the like may cause the strength of the nut 5 to become insufficient as a nut of a ball screw. When the nut 5 is made of a metal such as steel, however, a sufficient strength as a nut of a ball screw can be ensured.

Such a ball screw 1 is designed so that when the nut 5 screwed on the threaded shaft 3 via the balls 9 and the threaded shaft 3 are made to rotate relatively, the threaded shaft 3 and nut 5 move relatively in the axial direction via rolling of the balls 9. In addition, the ball raceway 7 and the ball circulation passage 11 form an endless ball passage and the balls 9 which roll through the ball raceway 7 endlessly circulate through the endless ball passage, so the threaded shaft 3 and the nut 5 can continuously move relative to each other.

Here, the ball circulation passage 11 will be described in detail, with reference to the cross-sectional views of FIGS.. 10 and 11 (cross-sectional views cut along a plane perpendicular to the axial direction) The ball circulation passage 11 is formed integrally with the inner circumferential surface of the nut 5. To be described in detail, a part of the columnar shaped inner circumferential surface of the nut 5 is concaved by plastic working or cutting to form a concaved groove 22 used as the ball circulation passage 11. Accordingly, unlike the case of a tube type, deflector type, or other ball circulation type, no separate member for constituting the ball circulation passage is attached. Further, since no separate member is used, there is no possibility of forming a step produced at the boundary when a separate member is used, such as a case where a separate member is used.

As shown in FIG. 11, the balls 9 which roll to the end point of the ball raceway 7 are scooped up from one end part of the ball circulation passage 11 and sink to the inside of the nut 5 (outside in radial direction). Then, they pass through the ball circulation passage 11 and ride over a land part 3b of the threaded shaft 3 (thread of threaded groove 3a) then are returned from the other end of the ball circulation passage 11 to the start point of the ball raceway 7. It should be noted that the cross-sectional shape of the ball circulation passage 11 may be an arc shape (single arc shape) or a gothic arc shape.

The applications of the ball screw 1 according to the third example are not particularly limited, but it can be suitably used for an automobile part, positioning device, etc.

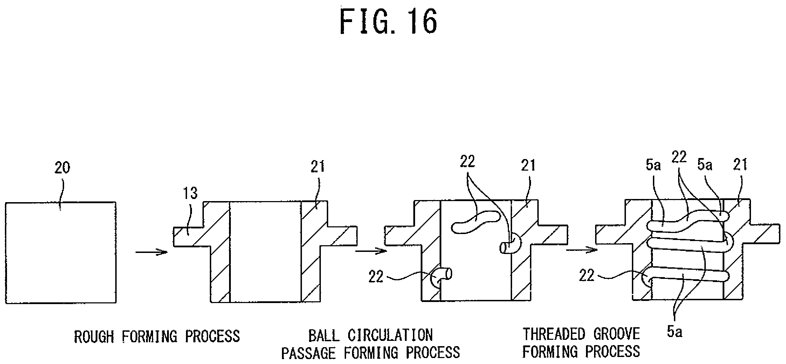

Next, one example of a method of manufacturing the ball screw 1 according to the third embodiment will be described with reference to FIG. 16 to 20. Firstly, a columnar shaped steel blank 20 is worked by cold forging or another type of plastic working to obtain a blank 21 having substantially the same shape as the nut 5 (substantial cylindrical shape) (rough forming process). At this time, plastic working is used to form a flange 13 at the outer circumferential surface of the blank 21.

Next, a part of the columnar shaped inner circumferential surface of the blank 21 is concaved by cold forging or another type of plastic working (or by cutting) to form a concaved groove 22 constituting a ball circulation passage 11 for connecting the end point and the start point of the ball raceway 7 (ball circulation passage forming process) .. As a specific example of a method of forming a concaved groove 22, there is the following method. That is, a die (not shown) having a projecting part with a shape corresponding to the concaved groove 22 is inserted into the blank 21, the projecting part of the die is brought into contact with the inner circumferential surface of the blank 21, and the die is strongly pressed against the inner circumferential surface of the blank 21 to form the concaved groove 22 by plastic working.

For example, as shown in FIG. 22 to be described later, a die of a cam mechanism having a cam driver and a cam slider having a projecting part with a shape corresponding to the concaved groove 22 may be used to form a concaved groove 22. To be described in detail, the cam driver and the cam slider are inserted into the blank 21. At that time, the cam slider is arranged between the blank 21 and the cam driver and the projecting part is arranged to face the inner circumferential surface of the blank 21. The cam slider and cam driver arranged inside of the blank 21 are in contact with each other at the slanted surface which extends in the substantial axial direction of the blank 21 (direction slightly slanted from the axial direction of the blank 21). The two slanted surfaces constitute the cam mechanism of the die.

Here, when the cam driver is made to move in the axial direction of the blank 21, the cam mechanism provided with the two slanted surfaces (wedge effect) is used to move the cam slider outward in the radial direction of the blank 21. That is, a force is transmitted from the slanted surface of the cam driver to the slanted surface of the cam slider, and the force of the cam driver in the axial direction is converted to the force for moving the cam slider outward in the radial direction. As a result, the projecting part of the cam slider strongly presses against the inner circumferential surface of the blank 21, so that the concaved groove 22 is formed at the inner circumferential surface of the blank 21 by plastic working, Note that, instead of the method shown in FIG, 22, the method shown in Patent Document 1 (method shown in FIG. 26) may also be used.

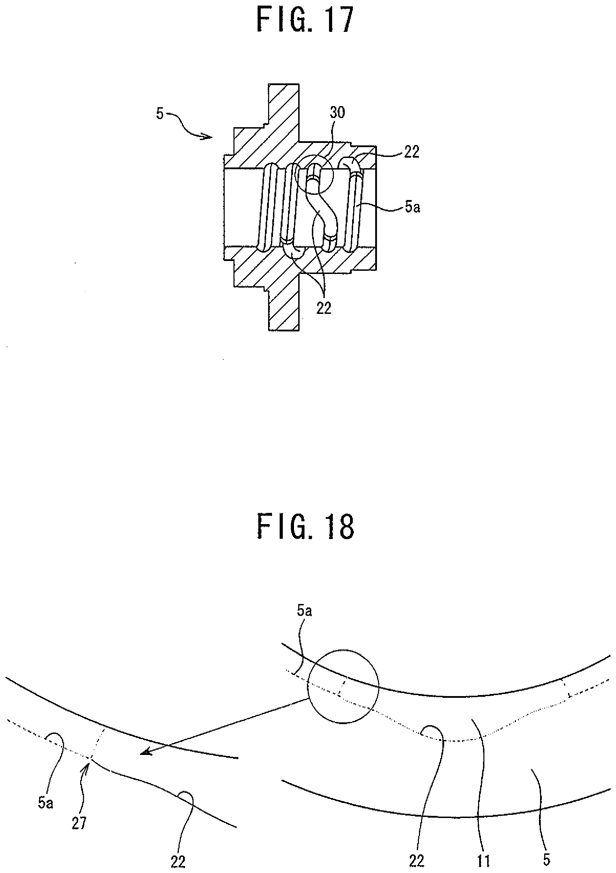

Next, the inner circumferential surface of the nut 5 is constituted with a threaded groove 5a by the use of commonly used cutting (for example, the method shown in FIG. 24 to be described later) to be connected with the end parts of the ball circulation passage 11 (concaved groove 22) (threaded groove forming process) At this time, since the end parts of the concaved groove 22 (ball circulation passage 11) has a spherical shape, no edge part is formed at the step of the boundary part 30 with the threaded groove 5a, like the case of a deflector type ball screw. The step becomes smooth (See FIG. 18 illustrative of enlarged the part around the concaved groove 22 and the part around the enlarged step).

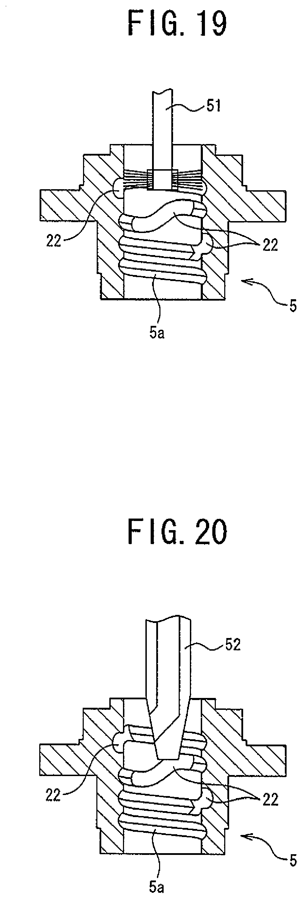

However, the boundary part 30 of the concaved groove 22 (ball circulation passage 11) and the threaded groove 5a (ball raceway 7) (see FIG. 17) may be formed with minute burrs by cutting. If there are such burrs and the balls 9 pass through the boundary part 30, abnormal noise or fluctuations in operating torque will occur, resulting in the shortened lifetime. Therefore, to remove the burrs, a least one of brushing (see FIG. 19. Reference numeral 51 is brush) and blasting (see FIG, 20. Reference numeral 52 is blast nozzle) is performed on the boundary part 30 (deburring process).

Since the boundary part 30 has no burrs, the ball circulation passage 11 and the ball raceway 7 are smoothly connected. As a result, even when balls 9 pass through the boundary part 30, no abnormal noise or fluctuations in operating torque will occur and reduction in lifetime will hardly occur. Additionally, when brushing or blasting is carried out, the compressive residual stress of the surface improves the fatigue strength. Furthermore, since the brushing or blasting process is lower in cost than that of shot peening, a ball screw 1 can be produced inexpensively. Furthermore, due to brushing or blasting process, there are no burrs at the boundary part 30, and in addition, a deburred surface shape is obtained. Due to these effects, the balls 9 can be made to circulate more smoothly. Note that, a "deburred surface shape" is a curved chamfered shape.

Furthermore, according to the conventional deflector type ball screw, when the brushing or blasting process is carried out, the abrasives grain, media, chip, etc. to be described later may remain between the deflector and the deflector hole. However, in the ball screw 1 according to the third embodiment, as the nut 5 and the ball circulation passage 11 are integrally formed, the above problem of residual abrasives grain, media, chip, etc. may not occur.

In the brushing process, a brush made of steel, stainless steel, polyamide resin (nylon), etc. may be used. This brush may also be a brush provided with abrasive grain. The type of the abrasive grain is not particularly limited, but alumina, silicon carbide, diamond, etc. is preferable. Further, the blasting process is a treatment for spraying media from a blast nozzle to the boundary part 30. The type of media is not particularly limited, but steel, glass, alumina, or a polyamide resin (nylon) or another type of plastic is preferable. Additionally, the time over which spraying the media is not particularly limited, but 2 to 5 seconds is preferable and around 3 seconds is more preferable. Furthermore, the surface roughness of the boundary part 30 after the deburring step is preferably equal to and smaller than 1.6 µmRa.

Finally, heat treatment such as hardening, tempering, and the like is conducted under desired conditions to obtain the nut 5. As examples of this heat treatment, carburizing, carbonitriding, induction heat treatment, etc, may be employed. Note that, such a heat treatment may be performed before the deburring process. When the brushing or blasting process is performed after the heat treatment, the effect of improved fatigue strength is improved by the compressive residual stress of the surface. Additionally, when the heat treatment is carburizing or carbonitriding, the material of the nut 5 is preferably SCM420, and when the heat treatment is induction heat treatment, the material is preferably S53C or SAE4150.

The nut 5 produced in this way and the threaded shaft 3 and balls 9 produced by the commonly used method are assembled to produce the ball screw 1.

The above-mentioned rough forming process and ball circulation passage forming process are performed by plastic working, so this method of manufacturing a ball screw 1 is high in material yield and also enables inexpensive manufacturing a ball screw with high accuracy. Further, since plastic working is used for production, the metal flow (fiber flow) of the steel blank 20 is hardly cut off. Further, as work hardening occurs, the nut 5 with high strength is obtainable.

The type of the plastic working is not particularly limited, but forging is preferable In particular, cold forging is preferable . Hot forging may also be employed, but the cold forging enables finishing with higher accuracy than that of the hot forging, so a nut 5 with sufficient with high accuracy is obtainable without post-working. Accordingly, the ball screw 1 can be inexpensively produced.. The plastic working in the rough forming process and the ball circulation passage forming process is preferably performed by the cold forging, but the plastic working in either process may also be performed by the cold forging. Further, cutting etc. may be assembled with the plastic working.

Note that, the present example shows one example according to the third embodiment. The third embodiment is not limited to the present example For example, in the ball screw according to the present example, a nut circulation type of ball screw provided with a ball circulation passage 11 which returns and circulates the balls 9 from an end point to start point of the ball raceway 7 at the nut 5 has been illustrated, but the third embodiment is applicable to a threaded shaft circulation type of ball screw provided with the ball circulation passage 11 at the threaded shaft.

### (Fourth Embodiment)

The fourth embodiment relates to a method of manufacturing a nut constituting part of a ball screw, a die used in the method of manufacturing the same, and a nut used for a ball screw manufactured by the method of manufacturing the same.

The ball screw is provided with: a nut at the inner circumferential surface of which a spiral groove is formed; a threaded shaft at the outer circumferential surface of which a spiral groove is formed; balls arranged in a raceway between the spiral groove of the nut and the spiral groove of the threaded shaft; and a ball return passage which returns the balls from the end point to the start point of the raceway, the balls rolling through the raceway whereby the nut moves relative to the threaded shaft.

Such a ball screw is used not only as positioning devices of general industrial machinery, but also as electric powered actuators mounted in automobiles, motorcycles, ships, and other vehicles.

As the ball return passages of the ball screw, there are the circulation tube type, deflector type, etc. In the case of the deflector type, the deflector in which the concaved part constituting the ball return passage is formed is fit in the through hole of the nut. In contrast, the following Patent Document 1 describes that the concaved part constituting the ball return passage (circulation groove) is directly formed at the inner circumferential surface of the nut blank by plastic working. This method of formation will be described using FIG. 26.

First, as shown in FIG. 26A, a die provided with a cylindrically shaped working head 530 having letter S-shaped projecting parts 537 and 538 corresponding to the shape of the circulation groove is prepared. Further, the nut blank 510 is placed on a table 200 with an axial direction thereof facing the horizontal direction, the working head 530 is inserted into the nut blank 510, the projecting parts 537 and 538 are made to face upward, and the base end part 530a and front end part 530b are fastened, Next, in this state, the top member 520 of the die is put the press force upon to make it descend and the projecting parts 537 and 538 are made to push against the inner circumferential surface 511 of the nut blank 510 so as to make the inner circumferential surface 511 of the nut blank 510 plastically deform (see FIG. 26B).

However, in the method described in Patent Document 1, if the surface roughness of the circulation passage is rough, the circulation passage is liable to indentation or flaking by the process of the following (1) to (5):
(1) Iron particle and other abrasive particle are produced inside the circulation passage due to contact with the other balls.
(2) The abrasive particle produced inside the circulation passage sticks to the balls and enters the raceway.
(3) The abrasive particle which enters the raceway is pressed between the ball screw grooves and the balls, and then the ball screw groove and balls has an indentation.
(4) Stress concentrates at the formed indentation resulting in cracks and finally leads to surface flaking.
(5) Due to the abrasive particle produced in the circulation passage entering the grease or other lubricant, the lubricating film formed at the surface of the ball screw groove is partially destroyed, the lubrication performance falls, and a temperature rise or early wear is liable to be caused.

To solve such a problem, by grinding or blasting etc., the surface of the circulation passage to make the roughness a suitable value may be mentioned, but there are problems that the number of steps increases and the working costs rises.

Further, in the case of a conventional deflector type ball screw, the deflector is formed by sintering, but there is a similar problem as with the working costs.

Therefore, the fourth embodiment has been made in view of the above problem. The object is to provide a method of manufacturing a nut used for a ball screw which enables prevention of occurrence of an indentation and surface flaking without increasing a step, a die used for the method of manufacturing the same, and a nut used for a ball screw manufactured by the method of manufacturing the same,

A die according to one aspect of the fourth embodiment for solving the above problem is a die used for manufacturing a nut of a ball screw provided with: a nut at the inner circumferential surface at which a spiral groove is formed; a threaded shaft at the outer circumferential surface of which a spiral groove is formed; balls arranged in a raceway constituted by the spiral groove of the nut and the spiral groove of the threaded shaft; and a plurality of ball return passages formed in the inner circumferential surface of the nut as a plurality of concaved parts and return the balls from the end point to the start point of the raceway, the balls rolling through the raceway so that the nut relatively moves with respect to the threaded shaft, the die characterized by having a cam driver inserted into a cylindrically shaped nut blank and moves in its axial direction, and a cam slider arranged between the nut blank and cam driver, wherein a plurality of projecting parts corresponding to the plurality of concaved parts are formed, and wherein movement of the cam driver causes the plurality of projecting parts to move in the radial direction of the nut, and by having an arithmetic average roughness Ra₁ of the surface of at least the plurality of projecting parts of 0.01 µm to 0.2 µm.

According to the die according to the above the aspect, the arithmetic average roughness Ra₁ of the surface of the projecting part of the cam slider is made 0.01 µm to 0.2 µm, so the surface roughness of the concaved part formed in the inner circumferential surface of the nut blank by forging using this cam slider can be reduced to an extent enabling prevention of occurrence of an indentation and surface flaking.

A method of manufacturing a nut used for a ball screw according to one aspect of the fourth embodiment for solving the above problem is a method of producing a nut of a ball screw provided with: a nut at the inner circumferential surface of which a spiral groove is formed; a threaded shaft at the outer circumferential surface of which a spiral groove is formed; balls arranged in the raceway formed between the spiral groove of the nut and the spiral groove of the threaded shaft; and a plurality of ball return passages formed at the inner circumferential surface of the nut as a plurality of concaved parts and return the balls from the end point to the start point of the raceway, the balls rolling inside the raceway whereby the nut moves relative to the threaded shaft, characterized by using a die of a cam mechanism according to one aspect so as to simultaneously form the plurality of concaved parts at the inner circumferential surface of the nut blank by forging.

According to the method of manufacturing a nut used for a ball screw according to the above aspect, by using a die having a cam driver inserted into a cylindrically shaped nut blank and moving in its axial direction and a cam slider arranged between the nut blank and cam driver, formed with a plurality of projecting parts corresponding to the plurality of concaved parts, and wherein movement of the cam driver causes the plurality of projecting parts to move in the radial direction of the nut and having an arithmetic average roughness Ra₁ of the surfaces of the projecting parts of equal to or greater than 0.01 µm to equal to or smaller than 0.2 µm so that movement of the cam driver in the axial direction is changed in direction to the radial direction by slanted surfaces forming a cam mechanism and transmitted to the cam slider and by using the plurality of projecting parts formed at the cam slider for forging the inner circumferential surface of the nut blank, the inner circumferential surface of the nut blank is formed with the plurality of concaved parts. Therefore, the arithmetic average roughness Ra₁ of the surface of at least the plurality of projecting parts of the die is equal to or greater than 0.01 µm to equal to or smaller than 0.2 µm, so the arithmetic average roughness Ra₂ of the surface of the concaved part formed by this projecting part by forging becomes greater than 0 µm to equal to or smaller than 1.6 µm.

As a result, it is possible to provide a method of manufacturing a nut used for a ball screw which reduces the surface roughness Ra₂ of the concaved part formed at the inner circumferential surface of the nut blank to an extent enabling prevention of occurrence of an indentation and surface flaking,

The nut used for a ball screw according to one aspect of the fourth embodiment for solving the above problem is a nut of a ball screw provided with: a nut formed at its inner circumferential surface with a spiral groove; a threaded shaft at the outer circumferential surface of which a spiral groove is formed; balls arranged in the raceway formed between the spiral groove of the nut and the spiral groove of the threaded shaft; and a plurality of ball return passages formed at the inner circumferential surface of the nut as a plurality of concaved parts and return the balls from the end point to the start point of the raceway, wherein the balls roll through the raceway whereby the nut moves relative to the threaded shaft, the nut characterized in that the arithmetic average roughness Ra₂ of the surface of the concaved part is greater than 0 µm to equal to or smaller than 1.6 µm.

According to the nut used for a ball screw according to the above aspect, it is possible to provide a nut used for a ball screw which can reduce the surface roughness Ra₂ of the surfaces of the concaved parts formed at the inner circumferential surface of the nut blank to an extent which enables prevention of occurrence of an indentation and surface flaking.

According to the fourth embodiment, it is possible to provide a method of manufacturing a nut used for a ball screw which can prevent the occurrence of an indentation and surface flaking without increasing a process, a die used for the method of manufacturing the same, and a ball screw-nut manufactured by the method of manufacturing the same.

Hereinafter, one example of a method of manufacturing a ball screw according to the fourth embodiment, a die used for the method of manufacturing the same, and a ball screw-nut manufactured by the method of manufacturing the same will be described with reference to the figures. FIG, 22 is a view for describing one example of a method of manufacturing a nut used for a ball screw according to the fourth embodiment. FIG. 23A is a plan view illustrative of a mated view of a cam slider and cam driver which constitute a die used in an example of the method of manufacturing a nut used for a ball screw according to the fourth embodiment, FIG. 23B is a perspective view illustrative of a cam slider, and FIG. 23C is a perspective view illustrative of a cam driver.

### (Die)

As shown in FIG. 22, a die 450 used for the present example according to the fourth embodiment is provided with: a blank holder 420 having a concaved part 421 which holds the nut blank 410; and a cam slider 430 and cam driver 440 arranged at the inside of the nut blank 410.

### (Cam Slider)

The cam slider 430, as shown in FIG. 23A and FIG. 23B, is a substantially columnar member having an outer circumferential surface 431 and a flat surface 432 parallel to the axial direction wherein the diameter of the circle constituting the outer circumferential surface 431 is slightly smaller than the diameter of the circle 411a constituting the inner circumferential surface 411 of the nut blank 410. The flat surface 432 of the cam slider 430 is formed at its center part in the radial direction with a slanted surface 433 which extends in the axial direction. This slanted surface 433 corresponds to a flat surface 432d which connects a bottom surface line 434a of the concaved part 434 of one end in the axial direction (top end) and a line 432d constituting the bottom end of the flat surface 432. Further, the letter S-shaped projecting part 435 corresponding to the letter S-shaped concaved part 415 constituting the ball return passage is formed at the outer circumferential surface 431 of the cam slider 430.

Here, the cam slider 430 is polished to a mirror finish at least at the surface 435a of the projecting part 435 by, for example, buffing Due to this mirror finish, the arithmetic average roughness Ra₁ of the surface 435a is made equal to or greater than 0.01 µm to equal to or smaller than 0.2 µm.

### (Cam Driver)

The cam driver 440, as shown in FIG. 23C, is a long plate-shaped member with one side surface 441 forming a slanted surface of the same slant as the slanted surface 433 of the cam slider 430, The other side surface 442 forms a circumferential surface along a circle 411a constituting the inner circumferential surface 411 of the nut blank 410. The axial direction dimension of the cam driver 440 is longer than the axial direction dimension of the cam slider 430. Further, the thickness of the cam driver 440 is slightly thinner than the thickness corresponding to the open width of the concaved part 434 of the cam slider 430 (dimension between two side surfaces of slanted surface 433).

The slanted surface 431 of the cam slider 430 and the slanted side surface 441 of the cam driver 440 constitute a cam mechanism of the die 450.

### (Method of manufacturing Nut Used for Ball Screw)

The method of manufacturing a nut used for a ball screw according to the fourth embodiment includes a circulation groove forming process for forming a circulation groove in the inner circumferential surface 411 of the nut blank 410 and a rolling groove forming process for forming a rolling groove at the inner circumferential surface 411 based on the position of the circulation groove that is formed.

### (Nut Blank Material)

Here, as the material of the nut blank 410, when the heat treatment after the rolling groove forming process and circulation groove forming process to be described later is carburizing, SCM420 is preferable, while when induction heat treatment, S53C or SAE4150 is preferable,

### (Circulation Groove Forming Process)

The die 450 is used by the following method to form a letter S-shaped concaved part 415 constituting the ball return passage (circulation groove) at the inner circumferential surface 411 of the nut blank 410.

First, a nut blank 410 is placed in the concaved part 421 of the blank holder 420. The cam slider 430 is inserted into the nut blank 410 with the concaved part 434 side up and with the letter S-shaped projecting part 435 facing the inner circumferential surface 411 of the nut blank 410. Next, the cam driver 440 is inserted between the cam slider 430 and the nut blank 410, At this time, the part of the cam driver 440 at the side surface 441 side is fitted with the concaved part 434 of the cam slider 430, and the slanted surface 433 of the cam slider 430 and slanted side surface 441 of the cam driver 440 are brought into contact. FIG, 22A shows this state.

Next, the inner circumferential surface 411 of the nut blank 410 is formed with the letter S-shaped concaved part 415 constituting the ball return passage by forging. Specifically, if applying a press force and pushing the cam driver 440 from above, force is transmitted from the slanted side surface 441 of the cam driver 440 to the slanted surface 433 of the cam slider 430. In accordance with this, the downward force of the cam driver 440 is converted to a force which moves the cam slider 430 to the outside in the radial direction whereby the letter S-shaped projecting part 435 formed at the cam slider 430 presses against the inner circumferential surface 411 of the nut blank 410 for plastic working. FIG. 22B shows this state.

Due to this, the inner circumferential surface 411 of the nut blank 410 is formed with the letter S-shaped concaved part 415 constituting the ball return passage.

Accordingly, according to the method of the present example according to the fourth embodiment, even when manufacturing a nut with a long axial direction dimension and a small inside diameter, it is possible to form a letter S-shaped concaved part 415 without causing damage to the cam driver 440.

Note that, when forming the inner circumferential surface 411 of the nut blank 410 with two letter S-shaped concaved parts, the above-mentioned method is used to form one letter S-shaped concaved part 415, then the cam driver 440 is pulled out, the cam slider 430 is operated to change the position of the projecting part 435, and the cam driver 440 is again inserted to perform the above method. In the case of forming three or more letter S-shaped concaved parts 415, this is repeated.

### (Rolling Groove Forming Process)

Next, the inner circumferential surface 411 of the nut blank 410 at which the circulation groove 415 is formed is formed with a rolling groove 416. FIG, 24A and FIG, 24B are views for describing one example of a method of manufacturing a nut used for a ball screw according to the fourth embodiment. FIG. 24A is a perspective view illustrative of the state of cutting a nut blank and FIG. 24B is a view of the nut blank and a cutting tool shown in FIG. 24A when viewed in the arrow VA direction. FIG. 25A and FIG. 25B are views for describing an example of the method of manufacturing a nut used for a ball screw according to a fourth embodiment, FIG. 25A is a cross-sectional view in the axial direction after cutting a nut blank, and FIG. 24B is a perspective view after cutting a nut blank.

Here, a cutting tool T such as shown in FIG. 24 is used for cutting, The cutting tool T forms a cutting edge Tb at the outer circumference of a rotary shaft Ta. The cutting surface of the cutting edge Tb (surface facing the circumferential direction) matches the shape of the rolling groove 416, The rotary shaft Ta rotates about the axis O (A of FIG. 24B), but this is independent revolution about the eccentric axis Q (B of FIG. 24B). Note that, as the mechanism which makes the cutting tool T rotate and revolve in this way, for example, a configuration which connects the rotary shaft Ta to the planetary gear of the planetary gear train (not shown) is conceived of, but the invention is not limited to this.

When performing this cutting process, near the end face of the nut blank 410, the path of revolution of the rotating cutting edge has to be escaped from the center of the path of revolution so that the rotating cutting edge Tb does not contact the inner circumferential surface 411 of the nut blank 410. In addition, as shown in FIG. 25, it is possible to make the rotary shaft Ta of the cutting tool T shift outward in the radial direction at a predetermined axial direction position, while feeding, revolving, and rotating it in the axial direction by a pitch of the rolling groove 416, to make it rotate at a faster speed so as to cut a spiral rolling groove 416 having a degree of smaller than 360 at the inner circumferential surface of the nut blank 410.

At this time, by matching the position in axial direction with and phase the circulation groove 415, as shown in FIG. 25, the circulation groove 415 can be formed to be connected to the two ends of the rolling groove 416. In the cutting tool T shown in FIG. 24, two rolling grooves 416 are formed, so the same nut blank 410 is cut two times, but if forming two cutting edges Tb on the rotary shaft Ta, the grooves can be formed by a single cutting operation

### (Nut Used for Ball Screw)

The arithmetic average roughness Ra₁ of the surface 435a of the letter S-shaped projecting part 435 formed at the cam slider 430 is equal to or greater than 0.01 µm to equal to or smaller than 0.2 µm, so the arithmetic average roughness Ra₂ of the circulation groove 416 formed using the die 450 having this cam slider 430 is made greater than 0 µm to equal to or smaller than 1.6 µm. Note that, the arithmetic average roughness Ra₂ of this circulation groove 416 is at least the roughness of the region in contact with the balls (rolling members) at the circulation groove 416.

Therefore, a nut used for a ball screw constituted by a circulation groove 416 formed at the inner circumferential surface in this way enables the provision of a method of manufacturing a nut of a ball screw which reduces the roughness to an extent enabling prevention of occurrence of an indentation and surface flaking, a die used for the method of manufacturing the same, and a nut used for a ball screw manufactured by the method of manufacturing the same,

Additionally, if making the arithmetic average roughness Ra₁ of the surfaces of the projecting parts 537 and 538 of the working head 530 0.01 to 0.2 µm, even if using the method shown in FIG. 26, it is possible to form a circulation groove 416 having a roughness similar to the above. Note that, the working method of the parts other than the circulation groove 416 is not particularly limited and can be suitably changed.

As described heretofore, one example of a method of manufacturing the nut used for a ball screw according to the fourth embodiment, the die used for the method of manufacturing the same, and the nut used for the ball screw manufactured by the method of manufacturing the same has been described, but the fourth embodiment is not limited to the above example. Various modifications are possible so long as not departing from the intent of the fourth embodiment. For example, the method of manufacturing the nut used for the ball screw according to the fourth embodiment, the die used for the method of manufacturing the same, and the nut used for the ball screw manufactured by the method of manufacturing the same may also be applied to a nut used for a ball screw which employs threaded shaft circulation.

### (Fifth Embodiment)

A fifth embodiment relates to a ball screw and a method of manufacturing the same.

The ball screw is provided with: a threaded shaft having a spiral threaded groove at its outer circumferential surface; a nut having a threaded groove which faces the threaded groove of the threaded shaft at its inner circumferential surface; and a plurality of balls rotatably loaded inside a spiral ball raceway constituted by the two threaded grooves. Additionally, when the nut screwed with the threaded shaft via the balls and the threaded shaft are made to rotate relatively, the threaded shaft and nut move relative to each other in the axial direction via rolling of the balls.

Such a ball screw is provided with a ball circulation passage which connects a start point and end point of a ball raceway to form an endless ball passage. That is, the balls rotate around the threaded shaft, while moving through the ball raceway, When the balls reach the end point of the ball raceway, they are scooped up from one end part of the ball circulation passage, pass through the ball circulation passage, and are returned from the other end part of the ball circulation passage to the start point of the ball raceway. In this way, the balls which roll through the ball raceway are endlessly circulated by the ball circulation passage, so the threaded shaft and nut can continuously move relative to each other..

As the ball circulation system which uses a ball circulation passage, a tube type, deflector type, etc. is general. In a tube type ball screw, the tube constituting the ball circulation passage is inserted in the hole formed in the nut and fastened. Further, in a deflector type ball screw, the deflector at which a circulation groove constituting a ball circulation passage is provided is inserted into the deflector hole formed in the nut and fastened.

On the other hand, the technique of applying induction heat treatment to harden the surface of the nut for the purpose of improving the strength of the nut is known (for example, see Patent Document 8). However, in a tube type or deflector type of ball screw, to fasten the tube or deflector, a hole which passes through the inside and outside circumferential surfaces of the nut is provided, so performing induction heat treatment uniformly in the circumferential direction is not easy.

In contrast, the ball screw disclosed in Patent Document 10 does not use any tube or deflector. The ball circulation passage is directly formed in the inner circumferential surface of the nut by plastic working, so that induction heat treatment can be uniformly applied in the circumferential direction of the nut,

However, when the nut is treated by uniform induction heat treatment in the circumferential direction, heat treatment similar to the ball raceway is performed on the ball circulation passage. In the ball screw disclosed in Patent Document 10, the ball circulation passage becomes deeper as a groove than the ball raceway, so that the part of the nut where the ball circulation passage is formed becomes thinner. If this part is treated by heat treatment similar to the ball raceway and ends up being made harder to a similar extent of hardness, the toughness of this part falls and the durability of the nut is liable to fall. For this reason, there is a limit to making this part thinner, so it is difficult to make the outside diameter of the nut smaller,

Therefore, the fifth embodiment has as its object to solve the above problems of the prior art, and provides a ball screw which is excellent in durability of the nut and which also enables a smaller size nut and a method of manufacturing the same.

To solve this problem, the embodiment is comprised as follows: That is, the ball screw according to the fifth embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and ball circulation passage which returns and circulates the balls from an end point to a start point of the ball raceway, the ball screw characterized in that the ball circulation passage is provided with a concaved groove formed by concaving a part of an inner circumferential surface of the nut and in that a surface hardness of the threaded groove of the nut is equal to or greater than HRC 58 to equal to the smaller than HRC 62, a surface hardness of both of the end parts of parts connecting with the ball raceway in the ball circulation passage is equal to or greater than HRC 58 to equal to or smaller than 62, and a surface hardness of an intermediate part between the both of the end parts in the ball circulation passage is not more than HV550.

In a ball screw according to the fifth embodiment, the concaved groove constituting the ball circulation passage is preferably formed by forging.

Further, the method of manufacturing a ball screw according to the fifth embodiment is characterized by, when manufacturing such a ball screw, forming the concaved groove constituting the ball circulation passage by forging, forming the threaded groove of the nut by cutting, then subjecting only the both of the end parts in the ball circulation passage and the threaded groove of the nut to induction heat treatment.

The ball screw according to the fifth embodiment is not hardened and is excellent in toughness at the thin wall part of the nut, so is excellent in durability of the nut plus enables a smaller size of the nut.

Further, the nut is subjected to induction heat treatment so that the thin wall part of the nut is not hardened, so the method of manufacturing a ball screw according to the fifth embodiment is enables manufacturing a ball screw with excellent in durability of the nut and a small sized nut.

One example of the ball screw and method of manufacturing the same according to the fifth embodiment and will be described in detail with reference to the drawings. FIG. 9 is a cross-sectional view of a ball screw of one example according to the fifth embodiment (cross-sectional view cut along a plane in the axial direction).

As shown in FIG, 9, the ball screw 1 is provided with: a threaded shaft 3 having a spiral threaded groove 3a at the outer circumferential surface; a nut 5 having a spiral threaded groove 5a which faces the threaded groove 3a of the threaded shaft 3 at its inner circumferential surface; a plurality of balls 9 rotatably loaded in a spiral ball raceway 7 constituted by the two threaded grooves 3a and 5a; and a ball circulation passage 11 which returns and circulates the balls 9 from an end point to start point of the ball raceway 7.

That is, the balls 9 rotate around the threaded shaft 3, while moving through the ball raceway 7. When reaching the end point of the ball raceway 7, they are scooped up from one end part of the ball circulation passage 11, pass through the ball circulation passage 11, and are returned from the other end part of the ball circulation passage 11 to the start point of the ball raceway 7.

Note that, the cross-sectional shapes of the threaded grooves 3a and 5a may be arc shapes (single arc shapes) or gothic arc shapes. Additionally, the material of the nut 5 is steel or another metal material. Specifically, S53C or SAE4150 is preferable. Furthermore, the materials of the threaded shaft 3 and balls 9 are not particularly limited. General materials can be used For example, a metal (steel etc.), ceramic, or resin may be mentioned. Specifically, for the threaded shaft 3, S53C, SAE4150, plus SCM415, SCM420, and other carburized steel are preferable, while for the balls 9, SUJ2 or other bearing steel or ceramic are preferable.

Such a ball screw 1 is designed so that when the nut 5 screwed on the threaded shaft 3 via the balls 9 and the threaded shaft 3 are made to rotate relatively, the threaded shaft 3 and nut 5 move relatively in the axial direction via rolling of the balls 9. Additionally, the ball raceway 7 and the ball circulation passage 11 form an endless ball passage and the balls 9 which roll through the ball raceway 7 endlessly circulate through the endless ball passage, so that the threaded shaft 3 and the nut 5 can continuously move relative to each other.

Here, the ball circulation passage 11 will be described in detail with reference to the cross-sectional views of FIGS. 10 and 11 (cross-sectional views cut along a plane perpendicular to the axial direction). The ball circulation passage 11 is formed integrally with the inner circumferential surface of the nut 5. To be described in detail, a part of the columnar shaped inner circumferential surface of the nut 5 is concaved by plastic working or removal process (for example, cutting or electro-discharge machining) to form a concaved groove 22 used as the ball circulation passage 11. Accordingly, unlike the case of a tube type, deflector type, or other ball circulation type, no separate member for constituting the ball circulation passage is attached.

As shown in FIG. 11, the balls 9 which roll to the end point of the ball raceway 7 are scooped up from one end part of the ball circulation passage 11 and sink to the inside of the nut 5 (outside in radial direction). Additionally, they pass through the ball circulation passage 11 and ride over a land part 3b of the threaded shaft 3 (thread of threaded groove 3a) then are returned from the other end of the ball circulation passage 11 to the start point of the ball raceway 7. Note that, the cross-sectional shape of the ball circulation passage 11 may be an arc shape (single arc shape) or gothic arc shape.

The applications of the ball screw 1 of this example of the fifth embodiment are not particularly limited, but the use for an automobile part, positioning device, etc, is suitably possible.

Next, one example of a method of manufacturing a ball screw 1 according to the fifth embodiment will be described with reference to FIGS. 16, 17. First, a columnar shaped steel blank 20 is worked by cold forging or another type of plastic working to obtain a blank 21 of a shape substantially the same as the nut 5 (substantially cylindrical shape) (rough forming process). At this time, plastic working is used to form a flange 13 at the outer circumferential surface of the blank 21.

Next, a part of the columnar shape inner circumferential surface of the blank 21 is concaved by cold forging or another type of plastic working (or by cutting) so as to form a concaved groove 22 constituting a ball circulation passage 11 which connects the end point and start point of the ball raceway 7 (ball circulation passage forming process). At this time, a concaved part constituting an oil reservoir may be formed together with the concaved groove 22 by plastic working (or by cutting). As a specific example of the method for forming the concaved groove 22, the following method may be mentioned That is, it is possible to insert a die (not shown) having a projecting part with a shape which corresponding to the concaved groove 22 in the blank 21, make the projecting part of the die contact the inner circumferential surface of the blank 21, and strongly push the die toward the inner circumferential surface of the blank 21 for plastic working to form the concaved groove 22.

For example, as shown in FIG. 22, it is also possible to use a die of a cam mechanism having a cam driver and a cam slider having a projecting part with a shape corresponding to the concaved groove 22 so as to form the concaved groove 22. To be described in detail, a cam driver and a cam slider are inserted in the blank 21, the cam slider is arranged between the blank 21 and the cam driver at that time, and the projecting part is arranged to face the inner circumferential surface of the blank 21. The cam slider and the cam driver arranged inside the blank 21 are in contact with each other at the slanted surface which extends in the substantially axial direction of the blank 21 (direction slanted slightly from axial direction of blank 21). The two slanted surfaces constitute the cam mechanism of the die.

Here, when making the cam driver move in the axial direction of the blank 21, the cam mechanism constituted by the two slanted surfaces (wedge effect) is used to move the cam slider outward in the radial direction of the blank 21. That is, a force is transmitted from the slanted surface of the cam driver to the slanted surface of the cam slider, while a force of the cam driver in the axial direction is being converted to a force which moves the cam slider outward in the radial direction. As a result, the two projecting parts of the cam slider strongly push against the inner circumferential surface of the blank 21, so that the concaved groove 22 is formed at the inner circumferential surface of the blank 21 by plastic working. Note that, instead of the method shown in FIG. 22, the method shown in FIG. 26 may also be used.

Next, the inner circumferential surface of the nut 5 is formed with a threaded groove 5a by commonly used cutting (for example, the method shown in FIG. 24) so as to connect with the end part of the ball circulation passage 11 (concaved groove 22) (threaded groove forming process). At this time, the end part of the concaved groove 22 (ball circulation passage 11) forms a spherical shape, so at the step of the boundary part 30 with the threaded groove 5a, no edge part is formed as in the case of a deflector type ball screw. The step becomes smooth. As a result, even if the balls 9 pass through the boundary part 30, abnormal noise or fluctuations in operating torque hardly occurs, and its lifetime is hardly reduced.

Finally, the inner circumferential surface of the nut 5 is subjected to induction heat treatment to obtain the nut 5 Note that, the type of the quenching media used for quench at the time of hardening is not particularly limited, but water or oil is preferable.

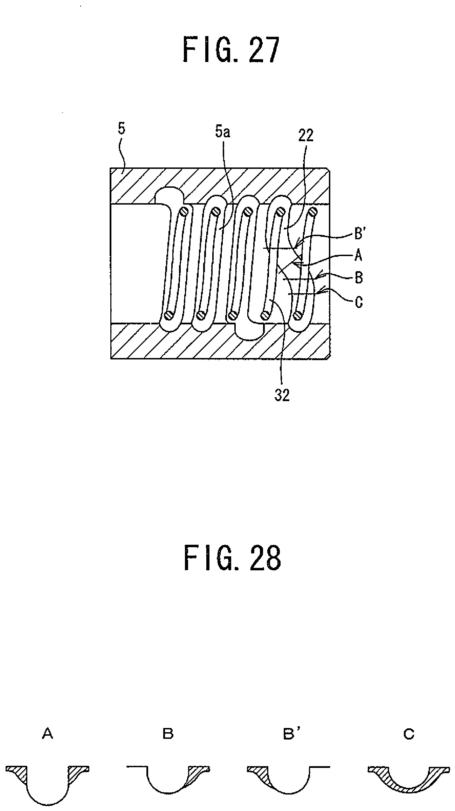

Here, the content of induction heat treatment will be described in detail with reference to Fig. 27 that is the cross-sectional view of the nut 5 cut along a plane in the axial direction. In this example according to the fifth embodiment, only a part of the inner circumferential surface of the nut 5 is subjected to induction heat treatment to form a hardened layer at the surface.. The rest of the parts are not subjected to induction heat treatment to cause them to harden. That is, the threaded groove 5a is subjected to induction heat treatment to make the surface hardness equal to or greater than HRC 58 to equal to or smaller than HRC 62. Additionally, the both of the end parts of the ball circulation passage 11 (concaved groove 22) which connect with the ball raceway 7 are subjected to induction heat treatment to make the surface hardness equal to or greater than HRC 58 to equal to or smaller than HRC 62. On the other hand, the intermediate part of the ball circulation passage 11 (concaved groove 22) between the both of the end parts is not subjected to induction heat treatment and makes a surface hardness equal to or smaller than HV550.

To harden the part in the above way, a coil used for induction heat treatment 32 is arranged at the inner circumferential surface of the nut 5 as shown in FIG. 27. That is, the coil 32 is arranged at the threaded groove 5a so as to follow the threaded groove 5a as a whole. Further, the coil 32 is arranged at the ball circulation passage 11 (concaved groove 22) to follow only the both of the end parts. When arranging the coil 32 used for induction heat treatment in this way, only the threaded groove 5a as a whole and the both of the end parts of the ball circulation passage 11 (concaved groove 22) are hardened, while the intermediate part of the ball circulation passage 11 (concaved groove 22) is not hardened..

As a result, the forming state of the effective hardened layer of greater than HV550 formed at the ball circulation passage 11 becomes as shown in FIG. 28. FIG. 28 is a cross-sectional view of the ball circulation passage 11 (concaved groove 22) cut along the plane perpendicular to the length direction of the ball circulation passage 11. A, B, B', and C of FIG. 28 correspond to the numerals of the cut positions shown in FIG. 27. For example, A of FIG. 28 is a cross-sectional view of a ball circulation passage 11 (concaved groove 22) cut along the line A of FIG. 27.

The intermediate part of the ball circulation passage 11, as shown by A, B, and B' in FIG. 28, is not formed with the effective hardened layer at any of the surface of the concaved groove 22 (shown as hatched part in FIG. 28). At the center part A in the intermediate part, some effective hardened layer is formed only at the two edge parts of the concaved groove 22, but the part of the groove bottom with which the balls 9 is brought into contact is not formed with an effective hardened layer. At the end parts B and B' in the intermediate part, the direction of advance of the balls 9 at the time of circulation of the balls 9 changes and an effective hardened layer is formed only at the striking parts (one edge part). On the other hand, the both of the end parts of the ball circulation passage 11, as shown in C of FIG. 28, are formed with effective hardened layers over the surface of the concaved groove 22 as a whole in the same way as the threaded groove 5a.

Further, the depth of the hardened layer formed at the threaded groove 5a at the contact points with the balls 9 is preferably equal to or greater than 1.0 mm to equal to or smaller than 2.0 mm in the direction from the center of curvature of the threaded groove 5a toward the contact points , Additionally, the depth of the effective hardened layers is preferably equal to or greater than 0.4 mm.

The threaded groove 5a is a load zone where a load is received via the balls 9, but a hardened layer is formed at the surface by induction heat treatment, so a large load can be withstood., Further, the both of the end parts of the ball circulation passage 11 are parts connecting with the ball raceway 7 and parts which the balls 9 which enter from the ball raceway 7 hit against and which receive impact, but hardened layers are formed at the surface by induction heat treatment, so the impact can be withstood. Further, wear is also slight. For this reason, the durability of the ball circulation passage 11 is excellent.

On the other hand, the intermediate part of the ball circulation passage 11 is a non-load zone where the balls 9 just slide and the load is small, so a hardened layer does not have to be formed. Rather, it is not hardened and is excellent in toughness, so is resistant to cracking and other damage. Additionally, the concaved groove 22 is a deeper groove than the threaded groove 5a, so the part at the nut 5 where the ball circulation passage 11 is formed becomes thinner than the other parts, but this thin part is excellent in toughness.. Therefore, even if the outside diameter of the nut is reduced (that is, even if the part at which the ball circulation passage 11 is formed thinner), it is resistant to cracking and other damage,

If hardening the part in the above way, it becomes possible to improve the durability of the nut 5 as a whole and reduce the size of the nut 5.

The nut 5 manufactured in this way and the threaded shaft 3 and balls 9 manufactured by the commonly used method are assembled to manufacture a ball screw 1.

The above-mentioned rough forming process and ball circulation passage forming process are performed by plastic working, so this method of manufacturing a ball screw 1 is high in material yield and also enables manufacturing a ball screw inexpensively with high accuracy . Additionally, since plastic working is used for manufacturing, the metal flow (fiber flow) of the steel blank 20 is hardly cut off. Further, as work hardening occurs, a high strength nut 5 is obtained.

The type of the plastic working is not particularly limited, but forging is preferable. In particular, cold forging is preferable.. Hot forging may also be employed, but the cold forging enables higher precision finishing compared with hot forging, so a nut 5 with sufficient high accuracy can be obtained even without subsequent working. Accordingly, the ball screw 1 can be inexpensively produced. The plastic working in the rough forming process and ball circulation passage forming process is preferably cold forging, but the plastic working in either step may also be replaced with the cold forging.

Note that, the present example shows one example according to the fifth embodiment. The fifth embodiment is not limited to the present example, For example, in the ball screw 1 of the present example, a nut circulation type of ball screw having the nut 5 with a ball circulation passage 11 which returns and circulates the balls 9 from an end point to start point of the ball raceway 7 has been illustrated, but the fifth embodiment can also be applied to a threaded shaft circulation type of ball screw having the threaded shaft with the ball circulation passage 11.

### (Sixth Embodiment)

A sixth embodiment relates to a ball screw..

The ball screw is provided with: a threaded shaft having a spiral threaded groove at its outer circumferential surface; a nut having a threaded groove which faces the threaded groove of the threaded shaft at its inner circumferential surface; and a plurality of balls rotatably loaded in a spiral ball raceway constituted by the two threaded grooves. Further, when the nut screwed with the threaded shaft via the balls and the threaded shaft are made to rotate relatively, the threaded shaft and nut move relative to each other in the axial direction via rolling of the balls..

Such a ball screw is provided with a ball circulation passage which connects a start point and end point of a ball raceway to form an endless ball passage. That is, the balls rotate around the threaded shaft, while moving through the ball raceway. When the balls reach the end point of the ball raceway, they are scooped up from one end part of the ball circulation passage, pass through the ball circulation passage 11, and are returned from the other end part of the ball circulation passage to the start point of the ball raceway . In this way, the balls which roll through the ball raceway are endlessly circulated by the ball circulation passage, so the threaded shaft and nut can continuously move relative to each other.

The above endless ball passage is provided with a ball raceway and a ball circulation passage, so when the circumferential direction length of the ball circulation passage is long, the length of the ball raceway becomes shorter by that amount. When the length of the ball raceway is short, the load capacity of the ball screw becomes small, so there is liable to be an untoward effect on the lifetime of the ball screw. For this reason, it has been desired to shorten the circumferential direction length of the ball circulation passage. Note that, the "circumferential direction length of the ball circulation passage" in the sixth embodiment means the distance in the circumferential direction between the two ends of the ball circulation passage, whereas the "circumferential direction" means the circumferential direction of the nut.

Therefore, the sixth embodiment has as its object to solve the problem of the prior art and provides a ball screw with a large load capacity and long lifetime.

To solve the above problem, the sixth embodiment include as follows. That is, a ball screw according to one aspect of the sixth embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns and circulates the balls from an end point to a start point of the ball raceway, characterized by satisfying the following three conditions A, B, and C.
condition A: the ball circulation passage comprises a concaved groove formed by concaving a part of the inner circumferential surface of the nut,
condition B: the ball circulation passage comprises both of the end parts for connecting with the ball raceway, an intermediate part arranged between the both of the end parts, and a curved part which connects the end parts and the intermediate part to have a substantially letter S shape, and
condition C: an edge part of the curved part in the edge part of the concaved groove is curved and the edge part at the outside in the radial direction of the curve is formed in a shape in which a plurality of arcs different in radius of curvature are smoothly connected.

In such a ball screw according to one aspect of the sixth embodiment, the groove width of the intermediate part is preferably narrower than the groove width of the end parts.

Additionally, a ball screw according to another aspect of the sixth embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns and circulates the balls from an end point to a start point of the ball raceway, characterized by satisfying the following three conditions D, E, and F.
condition D: the ball circulation passage comprises a concaved groove formed by concaving a part of the inner circumferential surface of the nut,
condition E: the ball circulation passage comprises both of the end parts for connecting with the ball raceway and two curved parts arranged between the both of the end parts and are curved in opposite directions to each other to have a substantially letter S shape, and
condition F: edge parts of the two curved parts in the edge part of the concaved groove are curved and the edge part at the outside in the radial direction of the curve is formed in a shape in which a plurality of arcs different in radius of curvature are smoothly connected.

Furthermore, a ball screw according to a further aspect of the sixth embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns and circulates the balls from an end point to a start point of the ball raceway, characterized by satisfying the following three conditions G, H, and I.
condition G: the ball circulation passage comprises a concaved groove formed by concaving a part of the inner circumferential surface of the nut,
condition H: the ball circulation passage comprises both of the end parts for connecting with the ball raceway and two curved parts arranged between the both of the end parts and curve in opposite directions to each other and forms a substantially letter S shape, and
condition I: edge parts of the two curved parts in the edge part of the concaved groove are curved and the edge part at the outside in the radial direction of the curve and the inside of the curve in the radial direction are formed in a single arc shape

In a ball screw according to these aspects, the concaved groove constituting the ball circulation passage is preferably formed by forging.

In the ball screw according to the sixth embodiment, circumferential direction length of the ball circulation passage is short and is longer by that amount in length of the ball raceway, whereby the load capacity is larger and its life is longer.

An example of a ball screw according to the sixth embodiment will be described in detail with reference to the drawings.

### (First Example)

FIG. 9 is a cross-sectional view for describing a structure of a ball screw of a first example according to the sixth embodiment (cross-sectional view cut along a plane in the axial direction).

As shown in FIG. 9, the ball screw 1 is provided with: a threaded shaft 3 having a spiral threaded groove 3a at the outer circumferential surface; a nut 5 having a spiral threaded groove 5a which faces the threaded groove 3a of the threaded shaft 3 at its inner circumferential surface; a plurality of balls 9 rotatably loaded in a spiral ball raceway 7 constituted by the two threaded grooves 3a and 5a; and a ball circulation passage 11 which returns and circulates the balls 9 from an end point to start point of the ball raceway 7.

That is, the balls 9 rotate around the threaded shaft 3, while moving through the ball raceway 7. When the balls 9 reach the end point of the ball raceway 7, they are scooped up from one end part of the ball circulation passage 11, pass through the ball circulation passage 11, and are returned from the other end part of the ball circulation passage 11 to the start point of the ball raceway 7.

Note that, the cross-sectional shape of the threaded grooves 3a and 5a (shape of cross-section in case of cutting along plane perpendicular to length direction) may be arc shapes (single arc shapes) or gothic arc shapes. Additionally, the materials of the threaded shaft 3, nut 5, and balls 9 are not particularly limited.. General materials can be used. For example, a metal (steel etc.), sintered alloy, ceramic, and resin may be mentioned,

Such a ball screw 1 is designed so that when the nut 5 screwed on the threaded shaft 3 via the balls 9 and the threaded shaft 3 are made to rotate relatively, the threaded shaft 3 and nut 5 move relatively in the axial direction via rolling of the balls 9. Then, the ball raceway 7 and the ball circulation passage 11 form an endless ball passage and the balls 9 which roll through the ball raceway 7 endlessly circulate through the endless ball passage, so the threaded shaft 3 and the nut 5 can continuously move relative to each other.

Here, the ball circulation passage 11 will be described in detail with reference to the cross-sectional views of FIGS. 10 and 11 (cross-sectional views cut along a plane perpendicular to the axial direction). The ball circulation passage 11 is formed integrally with the inner circumferential surface of the nut 5.. To be described in detail, a part of the columnar shaped inner circumferential surface of the nut 5 is concaved by plastic working or cutting to form a concaved groove 22 used as the ball circulation passage 11. Accordingly, unlike the case of a tube type, deflector type, or other ball circulation type, no separate member for constituting the ball circulation passage are attached., Besides, since no separate member is used, there is no possibility of forming a step produced at the boundary when a separate member is used, unlike when a separate member is used,

As shown in FIG. 11, the balls 9 which roll to the end point of the ball raceway 7 are scooped up from one end part of the ball circulation passage 11 and sink to the inside of the nut 5 (outside in radial direction). Additionally, they pass through the ball circulation passage 11 and ride over a land part 3b of the threaded shaft 3 (thread of threaded groove 3a), and then are returned from the other end of the ball circulation passage 11 to the start point of the ball raceway 7. Note that, the cross-sectional shape of the ball circulation passage 11 may be arc shapes (single arc shapes) or gothic arc shapes.

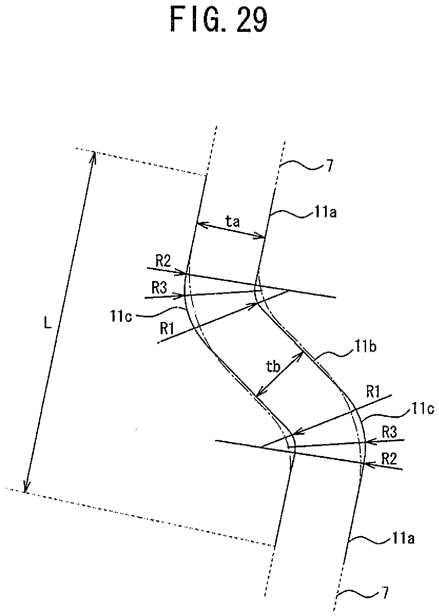

Furthermore, as shown in FIG. 29, in the ball circulation passage 11 (concaved groove 22), the both of the end parts 11a for connecting the ball raceway 7 (threaded groove 5a) are straight in shape.. A straight end part 11a forms the entry part of the balls 9. Then, between the both of the end parts 11a, an intermediate part 11b which extends straight is arranged. The two ends of this intermediate part 11b and the straight both of the end parts 11a are smoothly connected by the curved parts 11c so that the overall shape of the ball circulation passage 11 (concaved groove 22) forms a substantially letter S shape.

In the edge parts which form the outer circumference of the concaved groove 22, the edge part of the intermediate part 11b and the edge parts of the both of the end parts 11a form straight shapes, while the edge parts of the curved parts 11c are curved (for curved shapes) .. Additionally, the edge part at the inside in the radial direction of the curve is formed to a single arc shape (radius of curvature of R1), whereas the edge part at the outside in the radial direction is formed from two arcs with different radii of curvature (radii of curvature of R2, R3) which are smoothly continued. Furthermore, among the two arcs, the radius of curvature R2 of the arc at the end part 11a side is set larger than the radius of curvature R3 of the arc at the intermediate part 11b side.

With such a configuration, the circumferential direction length L of the ball circulation passage 11 (concaved groove 22) is shorter than the circumferential direction length of the ball circulation passage of a conventional ball screw. Note that, "the circumferential direction length of the ball circulation passage" means the circumferential direction distance between the two ends of the ball circulation passage. The "circumferential direction" means the circumferential direction of the nut.

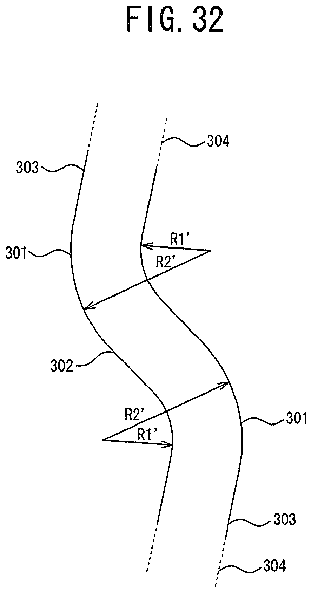

Here, the ball circulation passage of a conventional ball screw will be described with reference to FIG. 32. Note that, FIGS. 29, 30, and 31 show the edge parts forming the outer circumference of the ball circulation passage of a conventional ball screw by two-dot chain lines. Additionally, reference numeral 304 of FIG, 32 shows a ball raceway.

The configuration of the ball circulation passage (concaved groove) of FIG. 32 is substantially the same as the ball circulation passage 11 (concaved groove 22) of FIG. 29. Only the shape of the edge part at the outside in the radial direction of the curved part is different. That is, in the ball circulation passage of the conventional ball screw, the edge part at the outside in the radial direction of the curved part 301 is formed in the shape of a single arc shape in the same way as the edge part at the inside of the radial direction. The radius of curvature is R1' at the inside in the radial direction and the radius of curvature is R2' at the outside in the radial direction.

Due to the difference in this configuration, when the lengths of the straight intermediate part 302 and both of the end parts 303 are the same, the circumferential direction length of the ball circulation passage 11 (concaved groove 22) of the ball screw 1 of the first example becomes shorter than the circumferential direction length of the ball circulation passage of a conventional ball screw, so that the ball raceway 7 in the endless ball passage constituted by the ball raceway 7 and the ball circulation passage 11 can be formed longer. As a result, the load capacity of the ball screw 1 of the first example becomes larger than that of a conventional ball screw, so the lifetime becomes long. Additionally, the amount of working for forming the ball circulation passage 11 (concaved groove 22) can be reduced.

Furthermore, in the case of a ball screw where the ball circulation type is the deflector type, even if the shape of the ball circulation passage formed at the deflector is made suitable, processing error of the deflector or the deflector hole of the nut, positional deviation of the deflector due to vibration of the ball screw, etc, sometimes results in the effect not being sufficiently exhibited. However, in the ball screw 1 of the first example, the ball circulation passage 11 is formed integrally with the nut 5, so the effects due to the suitable shape of the ball circulation passage 11 is sufficiently exhibited.

In this example, the groove width tb of the intermediate part 11b is preferably narrower than the groove width ta of the end part 11a of the ball circulation passage 11. According to such a configuration, the balls 9 can smoothly enter from the ball raceway 7 to the ball circulation passage 11 and the balls smoothly advance at the intermediate part 11b of the ball circulation passage 11 (snaking motion of the balls 9 can be suppressed). That is, the circulation performance of the balls 9 at the ball screw 1 is improved.

The applications of the ball screw 1 of such a first example are not particularly limited, but it can be suitably used for an automobile part, positioning device, etc.

Note that, in the ball circulation passage 11 of FIG. 29, there are two arcs forming the edge part at the outside in the radial direction, but the invention is not limited to two. Three or more is also possible. Further, in the ball circulation passage 11 of FIG. 29, the center of curvature of the arc constituting the edge part at the inside in the radial direction of the curved part 11c and the centers of curvature of the two arcs which form the edge part at the outside of the radial direction differ, but the centers of curvature may also be the same,

Next, one example of a method of manufacturing a ball screw 1 of the first example will be described with reference to FIGS. 16 and 17. First, the columnar shaped steel blank 20 is worked by cold forging or another type of plastic working to obtain a blank 21 of substantially the same shape as the nut 5 (substantially cylindrical shape) (rough forming process). At this time, plastic working is used to form a flange 13 at the outer circumferential surface of the blank 21..

Next, a part of the columnar shaped inner circumferential surface of the blank 21 is concaved by cold forging or another type of plastic working (or cutting also possible) so as to form a substantially letter S shaped concaved groove 22 constituting a ball circulation passage 11 which connects the end point and start point of the ball raceway 7 (ball circulation passage forming process).

The shape of the ball circulation passage 11 (concaved groove 22) is complicated as described above (in particular, the shape of the edge part of the curved part 11c), so the above-mentioned ball circulation passage forming process is performed by plastic working. Therefore, working can be performed easily and inexpensively compared with cutting, Further, when the groove width of the ball circulation passage 11 (concaved groove 22) varies with the portions as described above, the use of cutting for formation becomes difficult, but in plastic working, so long as the die is produced, its formation is easy. Accordingly, the ball screw 1 of the first example according to the sixth embodiment is high in productivity.

As a specific example of the method for forming the concaved groove 22, the following one may be mentioned. That is, it is possible to insert a die (not shown) having a projecting part with a shape corresponding to the concaved groove 22 into the blank 21, make the projecting part of the die contact with the inner circumferential surface of the blank 21, and strongly push the die toward the inner circumferential surface of the blank 21 for plastic working to form the concaved groove 22.

For example, as shown in FIG. 22, a die of a cam mechanism having a cam driver and a cam slider having a projecting part with a shape corresponding to the concaved groove 22 may be used to form a concaved groove 22. To be described in detail, the cam driver and the cam slider are inserted into the blank 21. At that time, the cam slider is arranged between the blank 21 and the cam driver and the projecting part is arranged to face the inner circumferential surface of the blank 21. The cam slider and cam driver arranged in the blank 21 are in contact with each other at the slanted surface which extends in the substantial axial direction of the blank 21 (direction slightly slanted from the axial direction of the blank 21). The two slanted surfaces constitute the cam mechanism of the die.

Here, when making the cam driver move in the axial direction of the blank 21, the cam mechanism comprised by the two slanted surfaces (wedge effect) is used to move the cam slider outward in the radial direction of the blank 21.. That is, a force is transmitted from the slanted surface of the cam driver to the slanted surface of the cam slider, while a force in the axial direction of the cam driver is being converted to a force which moves the cam slider outward in the radial direction. As a result, the projecting part of the cam slider strongly presses against the inner circumferential surface of the blank 21, so plastic working is used to form the concaved groove 22 at the inner circumferential surface of the blank 21. Note that, instead of the method shown in FIG. 22, the method shown in FIG. 26 may also be used.

Next, the inner circumferential surface of the nut 5 is formed with a threaded groove 5a by commonly used cutting (for example, the method shown in FIG. 24) so as to be connected with the endmost parts of the ball circulation passage 11 (concaved groove 22) (threaded groove forming process). At this time, the endmost parts of the concaved groove 22 (ball circulation passage 11) forms a spherical shape, so at the step of the boundary part 30 with the threaded groove 5a, no edge part is formed like with the case of a deflector type ball screw. The step becomes smooth. As a result, even if the balls 9 pass through the boundary part 30, abnormal noise or fluctuations in operating torque hardly occurs and its lifetime is hardly reduced.

Finally, heat treatment such as hardening, tempering, and the like is conducted under the desired conditions to obtain the nut 5. As examples of this heat treatment, carburizing, carbonitriding, induction heat treatment, etc, may be mentioned.. When the heat treatment is carburizing or carbonitriding, the material of the nut 5 is preferably chrome steel or chrome molybdenum steel of a content of carbon of 0.10 to 0.25 mass% (for example, SCM420), whereas when the heat treatment is induction heat treatment, the material is preferably carbon steel with a content of carbon of 0.4 to 0.6 mass% (for example, S53C, SAE4150).

The nut 5 manufactured in this way and the threaded shaft 3 and balls 9 manufactured by the commonly used method are assembled to manufacture a ball screw 1.

Note that, the above-mentioned rough forming process and ball circulation passage forming process are performed by plastic working, so this method of manufacturing a ball screw 1 is high in material yield and also enables manufacturing a ball screw inexpensively with high accuracy.. Additionally, since the plastic working is used for manufacturing, the metal flow (fiber flow) of the steel blank 20 is hardly cut off. Further, work hardening occurs, so a high strength nut 5 is obtained.

The type of the plastic working is not particularly limited, but forging is preferable. In particular, cold forging is preferable. Hot forging may also be employed, but cold forging enables higher precision finishing compared with hot forging, so a nut 5 with sufficiently high accuracy can be obtained even without subsequent working. Accordingly, the ball screw 1 can be inexpensively produced. The plastic working in the rough forming process and ball circulation passage forming process is preferably cold forging, but the plastic working in either step may also be made cold forging.

### (Second Example)

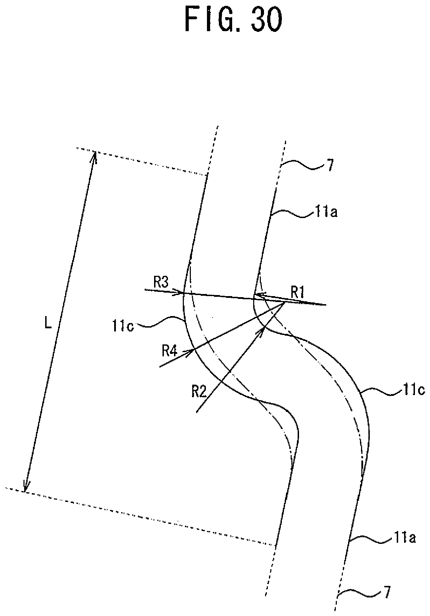

FIG. 30 is a view for describing the structure of a ball screw of a second example according to the sixth embodiment, and is a view illustrative of a concaved groove of the inner circumferential surface of the nut. Note that, the configuration and function effect of the ball screw of the second example are similar to those of the first example, so only different parts will be described, and the description of similar parts will be omitted. Further, in each of the following figures, parts the same as or corresponding to FIG. 29 are assigned the same reference numerals as FIG. 29.

In the ball screw 1 of the second example, in the ball circulation passage 11 (concaved groove 22), the both of the end parts 11a for connecting with the ball raceway 7 (threaded groove 5a) are straight in shape, A straight end part 11a constitutes an entry part of the balls 9. Further, the two ends 11a are smoothly connected by the two curved parts 11c curved in opposite directions so the overall shape of the ball circulation passage 11 (concaved groove 22) forms a substantially letter S shape. That is, as compared with the first example, there is a difference that the straight intermediate part is not provided.

In the edge parts which form the outer circumference of the concaved groove 22, the edge part of the both of the end parts 11a form straight shapes, while the edge parts of the curved parts 11c, 11c are curved (form curved shapes). Further, the edge part at the inside in the radial direction of the curve and the edge part at the outside in the radial direction are respectively formed from two arcs with different radii of curvature which are smoothly connected. The radii of curvature of the arcs constituting the edge part at the inside in the radial direction are R1 and R2, whereas the radii of curvature of the arcs which form the edge part at the outside in the radial direction are R3 and R4.

Furthermore, the two arcs constituting the edge part of the curved part 11c at the outside in the radial direction are the arc at the end part 11a side and the arc at the other curved part 11c side, and the radius of curvature R3 of the arc at the end part 11a side is set larger than the radius of curvature R4 of the arc at the other curved part 11c side. However, the edge part at the inside of the radial direction may be formed in a single arc shape in the same way as the first example.

With such a configuration, the circumferential direction length L of the ball circulation passage 11 (concaved groove 22) becomes shorter than the case of the first example, Further, the changes in advancing direction of the balls 9 which advance inside of the ball circulation passage 11 also become more moderate than the case of the first example

### (Third Example)

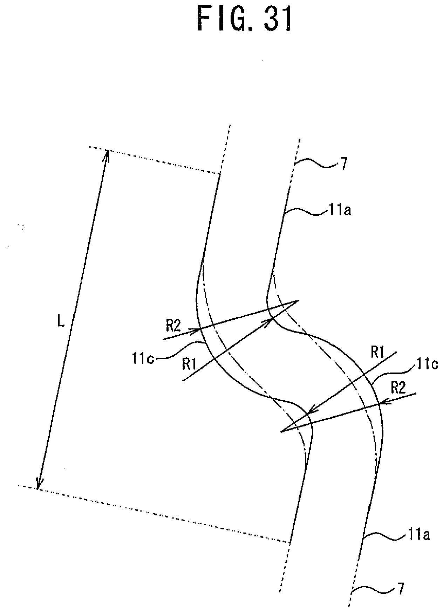

FIG. 31 is a view for describing the structure of a ball screw of a third example according to the sixth embodiment, and is a view illustrative of a concaved groove at the inner circumferential surface of the nut. Note that, the configuration and function effect of the ball screw of the third example are similar to those of the first example and second example. Therefore, only different parts will be described, and the description of similar parts will be omitted.

In the ball screw 1 of the third example, the ball circulation passage 11 (concaved groove 22) is provided with both of the end parts 11a for connecting with the ball raceway 7 (threaded groove 5a) which are straight in shape and the straight end parts 11a form the entry parts of the balls. In addition, both of the end parts 11a are smoothly connected by the two curved parts 11c which curve in opposite directions to each other and the overall shape of the ball circulation passage 11 (concaved groove 22) forms a substantially letter S shape. That is, as compared with the first example, the fact that the straight intermediate part is not provided is different.

In the end part constituting the outer circumference of the concaved groove 22, the edge parts of the both of the end parts 11a become straight, whereas the edge parts of the curved parts 11c are curved (form curved shapes). Further, the edge part at the inside in the radial direction of the curve and the edge part at the outside in the radial direction are respectively formed as single arc shapes. The radius of curvature of the arc constituting the edge part at the inside in the radial direction is R1, whereas the radius of curvature of the arc constituting the edge part at the outside in the radial direction is R2.

With such a configuration, the circumferential direction length L of the ball circulation passage 11 (concaved groove 22) is shorter than the case of the first example. Additionally, the change in the advancing direction of the balls 9 which advance through the ball circulation passage 11 is also more moderate than the case of the first example.

### (Embodiment of the invention)

The ball screw is provided with: a threaded shaft having a spiral threaded groove at its outer circumferential surface; a nut having a threaded groove which faces the threaded groove of the threaded shaft at its inner circumferential surface; and a plurality of balls rotatably loaded in a spiral ball raceway constituted by the two threaded grooves. Further, when the nut screwed with the threaded shaft via the balls and the threaded shaft are made to rotate relatively, the threaded shaft and nut move relatively in the axial direction via the rolling of the balls.

Such a ball screw is provided with a ball circulation passage which connects a start point and end point of a ball raceway to form an endless ball passage. That is, the balls rotate around the threaded shaft, while moving through the ball raceway. When the balls reach the end point of the ball raceway, they are scooped up from one end part of the ball circulation passage, pass through the ball circulation passage ball, and are returned from the other end part of the ball circulation passage to the start point of the ball raceway. In this way, the balls which roll through the ball raceway are endlessly circulated by the ball circulation passage, so the threaded shaft and nut can continuously move relative to each other.

As a method for improving the lubricity of the ball screw, the technique is known of providing an oil reservoir which holds lubrication oil, grease, or another type of lubricant. For example, Patent Document 14 discloses a ball screw in which an oil reservoir is provided in a ball raceway of a resin nut produced by the injection molding method. That is, the surface of the threaded groove of the nut is formed with a concaved part constituting an oil reservoir and this oil reservoir is configured to be filled with a lubricant..

However, in most cases, the nut is made of a metal. Therefore, in order to provide the ball raceway with an oil reservoir, it is necessary to form a threaded groove and then cut the groove surface to form a concaved part. For this reason, there is a problem of a rise in working costs of manufacturing the ball screw. Further, when a concaved part is arranged in the threaded groove, this is liable to a reduction in the load capacity or lifetime of the ball screw..

Therefore, the embodiment has as its object to solve the problems of the above-mentioned prior art and provides a ball screw which improves the lubricity without a reduction in the load capacity or lifetime, or a rise in manufacturing cost.

To solve the problem, the embodiment is configured as follows. That is, the ball screw according to the embodiment is a ball screw provided with: a threaded shaft having a spiral threaded groove at its outer circumferential surface; a nut having a threaded groove which faces the threaded groove of the threaded shaft at its inner circumferential surface; a plurality of balls rotatably loaded in a spiral ball raceway constituted by the two threaded grooves; and a ball circulation passage which returns and circulates the balls from an end point to a start point of the ball raceway, and the ball circulation passage is provided with a concaved groove formed by concaving a part of an inner circumferential surface of the nut, characterized by being provided with a lubricant reservoir which can hold a lubricant and in that the lubricant reservoir is provided with a dented part formed by denting a part of the inner surface of the concaved groove.

In a ball screw according to such an embodiment, preferably, the ball circulation passage is provided with both of the end parts connecting with the ball raceway and an intermediate part between the both of the end parts. An area of a cross-section of the lubricant reservoir cut along a plane perpendicular to a length direction of the ball circulation passage is larger at a part adjacent to the intermediate part than a part adjacent to the end parts.

Further, preferably, the ball circulation passage is curved and a lubricant reservoir arranged at the inner side in the radial direction of the curve of the ball circulation passage is larger in the area of the cross-section cut along a plane perpendicular to the length direction of the ball circulation groove than a lubricant reservoir arranged at the outer side of the curve in the radial direction of the ball circulation passage.

Furthermore, the concaved groove constituting the ball circulation passage and the dented part constituting the lubricant reservoir are preferably formed simultaneously by forging.

The ball screw according to the embodiment is provided with a lubricant reservoir at the ball circulation passage of the nut, and realizes excellent lubricity without a reduction in the load capacity and lifetime.

One example of the ball screw and a method of manufacturing the same according to the embodiment will be described in detail with reference to the drawings.

### (First Example)

FIG. 9 is a cross-sectional view for describing a structure of a ball screw of a first example according to the embodiment (cross-sectional view cut along a plane in the axial direction).

As shown in FIG, 9, the ball screw 1 is provided with a threaded shaft 3 having a spiral threaded groove 3a at the outer circumferential surface, a nut 5 having a spiral threaded groove 5a which faces the threaded groove 3a of the threaded shaft 3 at its inner circumferential surface, a plurality of balls 9 rotatably loaded in a spiral ball raceway 7 constituted by the two threaded grooves 3a and 5a, and a ball circulation passage 11 which returns and circulates the balls 9 from an end point to start point of the ball raceway 7.

That is, the balls 9 rotate around the threaded shaft 3, while moving through the ball raceway 7, reach the end point of the ball raceway 7, are scooped up from one end part of the ball circulation passage 11 to pass through the ball circulation passage 11, and are returned from the other end part of the ball circulation passage 11 to the start point of the ball raceway 7.

Note that, the cross-sectional shape of the threaded grooves 3a and 5a may be arc shapes (single arc shapes) or gothic arc shapes. Further, the materials of the threaded shaft 3, nut 5, and balls 9 are not particularly limited. General materials can be used. For example, a metal (steel etc..), sintered alloy, ceramic, and resin may be mentioned.

Such a ball screw 1 is designed so that when the nut 5 screwed on the threaded shaft 3 via the balls 9 and the threaded shaft 3 are made to rotate relatively, the threaded shaft 3 and nut 5 move relatively in the axial direction via rolling of the balls 9. Then, the ball raceway 7 and the ball circulation passage 11 form an endless ball passage and the balls 9 which roll through the ball raceway 7 endlessly circulate through the endless ball passage, so that the threaded shaft 3 and the nut 5 can continuously move relative to each other.

Here, the ball circulation passage 11 will be described in detail with reference to the cross-sectional views of FIGS 10 and 11 (cross-sectional views cut along plane perpendicular to the axial direction). The ball circulation passage 11 is, for example, formed integrally with the inner circumferential surface of the nut 5. To be described in detail, a part of the columnar surface shaped inner circumferential surface of the nut 5 is concaved by plastic working or cutting to form a concaved groove 22 used as the ball circulation passage 11. Accordingly, unlike the case of a tube type, deflector type, or other ball circulation type, no separate member for constituting the ball circulation passage are attached, Further, since no separate member is used, there is no possibility of forming a step having an edge part produced at the boundary when a separate member is used, such as when a separate member is used.

As shown in FIG.. 11, the balls 9 which roll to the end point of the ball raceway 7 are scooped up from one end part of the ball circulation passage 11 and sink to the inside of the nut 5 (outside in radial direction). Further, they pass through the ball circulation passage 11 and ride over a land part 3b of the threaded shaft 3 (thread of threaded groove 3a), and then are returned from the other end of the ball circulation passage 11 to the start point of the ball raceway 7. Note that, the cross-sectional shape of the ball circulation passage 11 may be an arc shape (single arc shape) or gothic arc shape.

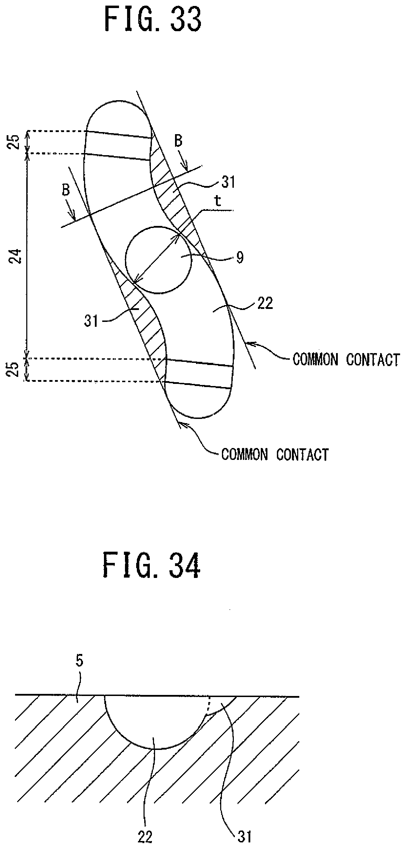

In addition, as shown in FIG. 33, in the concaved groove 22 constituting the ball circulation passage 11, the both of the end parts for connecting with the ball raceway 7 (threaded groove 5a) form straight shapes while an intermediate part 24 positioned between the both of the end parts is a curved shape curved to a substantially letter S shape.. Furthermore, the straight end parts are formed with entry parts of the balls 9, while the endmost parts of the straight end parts form arc shapes Note that, the overall shape of the concaved groove 22 is not limited to a substantially letter S shape such as shown in FIG. 33.

Furthermore, the nut 5 is provided with a lubricant, reservoir which can hold the lubricant. This lubricant reservoir is provided with a dented part 31 obtained by denting a part of the inner surface of the concaved groove 22 (see FIG. 34). Grease, lubricating oil, or other lubricant are held in the lubricant reservoir and suitably supplied to the ball circulation passage 11 during use of the ball screw 1. Additionally, the lubricant is applied on the surface of the balls 9 in the ball circulation passage 11, and reaches the ball raceway 7 together with the balls 9, so as to be used for lubricating the surfaces of the threaded grooves 3a and 5a and balls 9. For this reason, the ball screw 1 becomes excellent in lubricity. Further, the ball screw 1 is lubricated by the lubricant held in the lubricant reservoir, whereby the frequency of the maintenance work for supplying lubricant inside the ball screw 1 can be reduced.

The location of formation of the dented part 31 is not particularly limited, so long as it is provided on the inner surface of the concaved groove 22. However, for example, as shown in FIG. 33, it may be formed at a portion surrounded by the common tangent of the curved part and the arc-shaped endmost part of the substantially letter S shape intermediate part 24 and the edge part of the concaved groove 22 (shaded part of substantially bow shape at FIG. 33). In addition, as shown in FIG. 34, the nut inner circumferential surface side of the concaved part 31 may also be opened. In other words, the inner circumferential surface of the nut 5 is dented to form a dented part 31 continuous with the concaved groove 22.

Furthermore, the dented part 31 is smoothly connected to the concaved groove 22. That is, as will be understood from the cross-sectional view of FIG. 34, from the inner circumferential surface of the nut 5 through the dented part 31 to the concaved groove 22, the surface changes gradually in curvature while being smoothly connected. For this reason, the lubricant in the dented part 31 is easily supplied to the concaved groove 22.

Furthermore, the depth of the concaved part 31 (length of nut 5 in its radial direction) is deepest at the center in the length direction of the dented part 31. However, at all parts, the depth becomes smaller than the radius of curvature of the concaved groove 22 (1/2 of groove width "t" of the intermediate part 24).

Furthermore, the balls 9 which enter from the ball raceway 7 to the ball circulation passage 11 pass through the entry part 25 and hit the curved part of the intermediate part 24 to be guided and changed in direction of advance. As will be understood from FIGS. 33, 34, no dented part 31 is formed at the outside in the radial direction of the curve in the entry part 25 or a curved part of the ball circulation passage 11 (that is, the part which the balls 9 hit), so the circulation performance of the ball circulation passage 11 (guide performance of the balls 9) does not deteriorate.

Note that, the dented part 31 may also be provided at the outside in the radial direction of the curve of the ball circulation passage 11, but is preferably smaller than the dented part 31 provided at the inside in the radial direction of the curve from a similar viewpoint to the above. To be described in detail, assuming that the lubricant reservoir (dented part 31) is cut along a plane perpendicular to the length direction of the ball circulation passage 11 (concaved groove 22), the area of that cross-section is preferably smaller at the concaved part 31 provided at the outside in the radial direction of the curve of the ball circulation passage 11 than the concaved part 31 provided at the inside in the radial direction of the curve.

With such a configuration, the ball screw 1 of the first example is excellent in lubricity. Further, since not the ball raceway 7, but the ball circulation passage 11 is formed with a lubricant reservoir, there is no reduction in the load capacity or lifetime of the ball screw 1. The applications of the ball screw 1 of such a first example are not particularly limited, but it can be suitably used for an automobile part, positioning device, etc.

Next, one example of a method of manufacturing a ball screw 1 of a first example will be described with reference to FIGS. 16, 17. First, a columnar shaped steel blank 20 is worked by cold forging or another type of plastic working to obtain a blank 21 of a shape substantially the same as the nut 5 (substantially cylindrical shape) (rough forming process). At this time, the plastic working is used to form a flange 13 at the outer circumferential surface of the blank 21.

Next, a part of the cylindrically shaped inner circumferential surface of the blank 21 is concaved by cold forging or another type of plastic working (or by cutting) so as to form a substantially letter S-shaped concaved groove 22 constituting a ball circulation passage 11 which connects the end point and the start point of the ball raceway 7 (ball circulation passage forming process). Furthermore, a dented part 31 constituting an oil reservoir is formed by plastic working (or by cutting).

As a specific example of a method of forming a concaved groove 22 and concaved part 31, there is a following method That is, a die having a projecting part with a shape corresponding to the concaved groove 22 and another projecting part with a shape corresponding to the dented part 31 (not shown) is inserted into the blank 21, the two projecting parts of the die are brought into contact with the inner circumferential surface of the blank 21, and the die is strongly pressed against the inner circumferential surface of the blank 21 so as to form the concaved groove 22 and dented part 31 by plastic working. The concaved groove 22 and the concaved part 31 may be separately formed, but if simultaneously forming them by a single step as described above, the manufacturing cost of the ball screw 1 can be kept low.

For example, as shown in FIG. 22, a die of a cam mechanism having a cam driver, and a cam slider having a projecting part with a shape corresponding to the concaved groove 22 and another projecting part with a shape corresponding to the dented part 31 may be used to form a concaved groove 22 and dented part 31. To be described in detail, the cam driver and the cam slider are inserted into the blank 21. At that time, the cam slider is arranged between the blank 21 and the cam driver so that the two projecting parts are arranged to face the inner circumferential surface of the blank 21. The cam slider and cam driver arranged in the blank 21 are in contact with each other at the slanted surface which extends in the substantial axial direction of the blank 21 (direction slightly slanted from the axial direction of the blank 21) The two slanted surfaces constitute the cam mechanism of the die.

Here, when the cam driver is made to move in the axial direction of the blank 21, the cam mechanism constituted by the two slanted surfaces (wedge effect) is used to move the cam slider outward in the radial direction of the blank 21. That is, a force is transmitted from the slanted surface of the cam driver to the slanted surface of the cam slider, while a force in the axial direction of the cam driver is being converted to a force which moves the cam slider outward in the radial direction.. As a result, the two projecting parts of the cam slider strongly push against the inner circumferential surface of the blank 21, so plastic working is used to form the concaved groove 22 and dented part 31 at the inner circumferential surface of the blank 21. Note that, instead of the method shown in FIG. 22, the method shown in FIG. 26 may also be used.

Next, the inner circumferential surface of the nut 5 is formed with a threaded groove 5a by commonly used cutting (for example, the method shown in FIG. 24) so as to connect with the endmost part of the ball circulation passage 11 (concaved groove 22) (threaded groove forming process). At this time, the endmost part of the concaved groove 22 (ball circulation passage 11) forms a spherical shape, so at the step of the boundary part 30 with the threaded groove 5a, no edge part is formed like with the case of a deflector type ball screw. The step becomes smooth. As a result, even if the balls 9 pass through the boundary part 30, abnormal noise or fluctuations in operating torque seldom occurs and a reduction in lifetime seldom occurs..

Finally, heat treatment such as hardening, tempering, and the like is conducted under the desired conditions to obtain the nut 5. As examples of this heat treatment, carburizing, carbonitriding, induction heat treatment, etc. may be mentioned, When the heat treatment is carburizing or carbonitriding, the material of the nut 5 is preferably SCM420, whereas when the heat treatment is induction heat treatment, the material is preferably S53C or SAE4150.

The nut 5 manufactured in the above way and the threaded shaft 3 and balls 9 which are manufactured by commonly used methods are assembled to produce a ball screw 1.

Note that, the above-mentioned rough forming process and ball circulation passage forming process are performed by plastic working, so this method of manufacturing a ball screw 1 is high in material yield and enables forming of a ball screw with high accuracy inexpensively. Additionally, plastic working is used for manufacturing, so the metal flow (fiber flow) of the steel blank 20 is not cut much at all. Further, as work hardening occurs, the nut 5 with high strength is obtained

The type of the plastic working is not particularly limited, but forging is preferable. In particular, cold forging is preferable , Hot forging can also be employed, but cold forging enables higher precision finishing compared with hot forging. Therefore, the nut 5 with sufficiently high accuracy can be obtained even without subsequent working. Accordingly, the ball screw 1 can be inexpensively produced.. The plastic working in the rough forming process and the ball circulation passage forming process is preferably cold forging, but the plastic working in any single process may also be performed by cold forging.

### (Second Example)

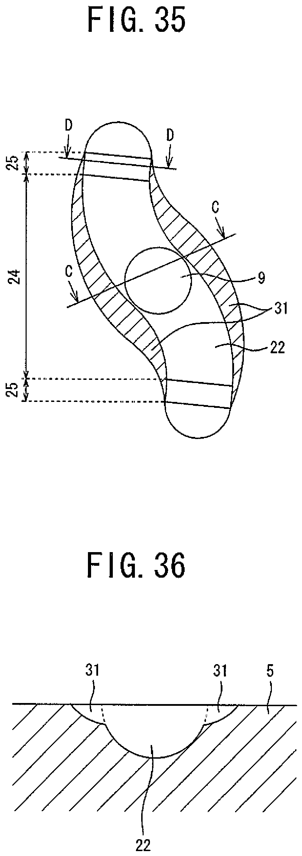

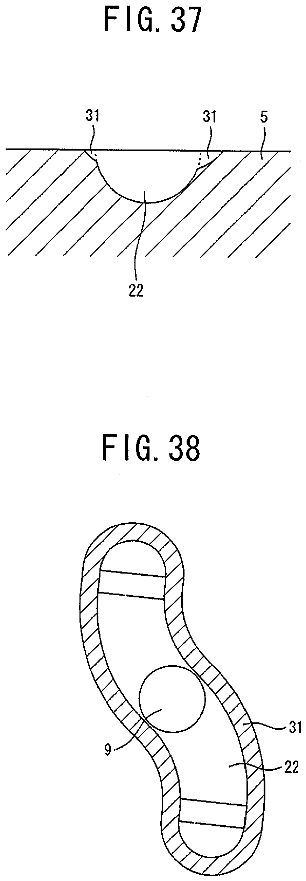

FIGS. 35 to 37 are views for describing the structure of the ball screw of a second example according to the embodiment. FIG. 35 is a view illustrative of the concaved groove and the dented part of the inner circumferential surface of the nut, whereas FIGS. 36 and 37 are cross-sectional views of the concaved groove and dented part of FIG. 35. Note that, the configuration and function effects of the ball screw of the second example are substantially similar to those of the first example, so only the different parts will be described and the description of similar parts will be omitted. Additionally, in the following figures, parts which are the same as or corresponding to FIGS. 9 to 11 and FIGS. 33, 34 are assigned with the same reference numerals as FIGS. 9 to 11 and FIGS. 33 and 34.

In the ball screw of the second example, the portion constituting the dented part 31, as shown along FIG. 35, is formed at the part along the entry part 25 and the intermediate part 24 at the edge part of the concaved groove 22 (shaded area in FIG. 35). In addition, as shown in FIGS.. 36 and 37, the dented part 31 is formed larger at the part along the intermediate part 24 than that at the part along the entry part 25.. To be described in detail, assuming that the lubricant reservoir (concaved part 31) is cut along a plane perpendicular to the length direction of the ball circulation passage 11 (concaved groove 22), the area of that cross-section is smaller at the part along the entry part 25 and larger at the part along the intermediate part 24 than that at the part along the entry part 25 Further, the cross-sectional area of the part along with entry part 25 is the smallest. The cross-sectional area gradually becomes larger, as coming closer to the center of the concaved part 31 in the length direction. The cross-sectional area becomes the largest at the center of the concaved part 31 in the length direction.

Furthermore, the depth of the dented part 31 (the length in the radial direction of the nut 5) is the deepest at the center of the concaved part 31 in the length direction. However, at all parts, the depth is smaller than the radius of curvature of the concaved groove 22 (1/2 of groove width of intermediate part 24).

Furthermore, the balls 9 which enter from the ball raceway 7 to the ball circulation passage 11 pass through the entry part 25 and hit the curved part of the intermediate part 24 to be guided and changed in direction of advance, Since the balls 9 hit the entry part 25, as will be understood from FIG. 37, a dented part 31 is formed with the cross-sectional area smaller at the outward side in the radial direction of the curve (left side in FIG, 37) than that at the inside in the radial direction (right side in FIG. 37). Accordingly, the circulation performance of the ball circulation passage 11 (guide performance of the balls 9) is hardly reduced.

### (Third Example, not in conformity with the invention)

FIG.. 38 is a view for describing a ball screw of a third example according to the embodiment, and is a view illustrative of a concaved groove and a dented part of the inner circumferential surface of the nut. Note that, since the configuration and function effects of the ball screw of the third example are similar to those of the first example and the second example, only different parts will be described and the description of similar parts will be omitted.

In the ball screw of the third example, as shown in FIG. 38, the concaved part 31 is formed along the entire edge part of the concaved groove 22 (shaded area in FIG. 38). Note that, in the case where the lubricant reservoir (concaved part 31) is cut along a plane perpendicular to the length direction of the ball circulation passage 11 (concaved groove 22) the area of the cross-section is substantially the same for all parts of the lubricant reservoir (dented part 31). The dented part 31 is uniformly formed along the entire edge part of the concaved groove 22. The lubricant reservoir is formed up to the endmost part of the concaved groove 22 (arc shaped part), so more lubricant can be held at the lubricant reservoir.

Further, the cross-sectional shape of the dented part 31 constituting the lubricant reservoir is not limited to an arc shape such as shown in FIGS. 34, 36, and 37. It may have a shape of a plurality of arcs different in radius of curvature which are smoothly connected, an oval shape, or a substantially triangular shape. In the case of a substantially triangular shape, the concaved groove 22 and the dented part 31 are smoothly connected. Furthermore, the concaved groove 22 and the dented part 31 may be smoothly connected by the cross-sectional arc-shaped projecting part. Furthermore, the lubricant reservoir may be a cross-sectional arc-shaped projecting part like that in the first embodiment.

Note that, the ball screws shown in the examples according to the above individual embodiments are also applicable to the ball screws shown in the other embodiments.

Further, the ball circulation grooves in the above individual embodiments may also be formed by another type of plastic working, cutting, electrodischarge machining, and other removal methods, without limiting to the forging shown in the above-mentioned FIGS. 22 and 26.

Furthermore, when the detailed conditions etc. of the heat treatment of the nut are not described, it is possible to apply general heat treatment conditions such as the heat treatment conditions described in the other embodiments without a problem.

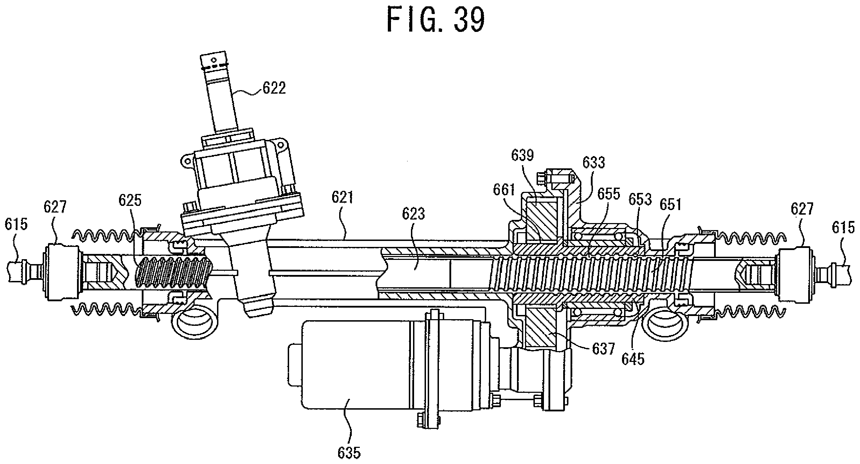

Further, the ball screws shown in the embodiments can be suitably applied to an electric power steering system (in particular, a rack type electric power steering system). FIG 39 is a partial cross-sectional view of the steering gears of an electric power steering system.

In FIG. 39, a rack shaft 623 and not shown pinion constituting the rack and pinion mechanism are housed in a rack and pinion housing 621 constituting a steering gear case.. The pinion is connected to a lower shaft 622. In the rack shaft 623, the rack 625 which meshes with the pinion is formed at the left in the figure, whereas spherical joints 627 which swingably support tie rods 615 are fastened to the both of the end parts. A threaded shaft of a ball screw is used for this rack shaft 623.

At the illustrated right end part of the rack and pinion housing 621, a ball screw housing 633 is attached. At the ball screw housing 633, a front end of an electric motor 635 is fastened to the bottom by bolts. A drive gear 637 fastened to the shaft of the electric motor 635 and a driven gear 639 which meshes with the drive gear 637 are housed.. Further, in the ball screw housing 633, a ball nut 645 is held rotatably via a double-row angular contact ball bearing.

The ball nut 645 is housed in the inner periphery of the driven gear 639. Further, a spline fitting part 661 is provided between the shaft center inner periphery side of the driven gear 639 and the outer periphery side of the ball nut 645. Due to this, the driven gear 639 and the ball nut 645 can freely slide relative to each other.

At the right of the rack shaft 623 as illustrated, a male ball screw groove (threaded part) 651 is formed. On the other hand, the ball nut 645 is formed with a female ball screw groove 653. A large number of steel balls 655 constituting the circulating balls are disposed between the male ball screw groove 651 and female ball screw groove 653. Further, the ball nut 645 is formed with a circulation groove, not illustrated, for circulating the steel balls 655.

In this electric power steering system, when the driver operates the steering wheel, a steering force is transmitted from the lower shaft 622 to the pinion. Along with the rack 625 which meshes with the pinion, the rack shaft 623 moves to either the left or right of the figure and the wheel turns via left and right tie rods. At the same time, based on the output of a steering torque sensor, not illustrated, the electric motor 635 rotates with a predetermined rotational torque in either the forward or reverse direction, The rotational torque is transmitted via a drive gear 637 and driven gear 639 to the ball nut 645. Further, by rotation of this ball nut 456, the thrust force acts on the male ball screw groove 651 of the rack shaft 623 via the steel balls 655 disposed in the female ball screw groove 653. Due to this, a steering assist torque is exhibited,

### Reference Signs List

201 threaded shaft
201a spiral groove
201b outer circumferential surface of threaded shaft (land part)
202 nut
202a spiral groove
202b through hole
202d inner circumferential surface of nut (surface continuing from side surface of ball circulation groove and extending in axial direction)
203 ball
204 deflector
241 ball circulation groove
241a groove bottom
241b side surface
241c edge portion
242 surface continuing from side surface of ball circulation groove and extending in axial direction
205 die
251 surface of base part
252, 253 projection corresponding to ball circulation groove

## Claims

1. A ball screw comprising:
a threaded shaft (201) having a spiral threaded groove (201a) at an outer circumferential surface;
a nut (202) having a threaded groove (202a) which faces the threaded groove (201a) of the threaded shaft (201) at an inner circumferential surface;
a plurality of balls (203) rotatably loaded in a spiral ball raceway constituted by both of the threaded grooves (201a, 202a); and
a ball circulation groove, which returns and circulates the balls (203) from an end point to a start point of the ball raceway,
wherein the nut (202) is formed by concaving a part of the inner circumferential surface (202d) of the nut to form the ball circulation groove constituted by a concaved groove, and forming the threaded groove (202a) in the inner circumferential surface (202d) of the nut to be connected with an end part of the ball circulation groove, and
wherein at least a part of an edge portion constituted by both of side surfaces of the ball circulation groove and a surface which continue from each of the side surfaces and which extend in an axial direction is formed to be rounded,
**characterized in that** the ball screw further comprises a lubricant reservoir which can hold a lubricant and the lubricant reservoir is constituted by a dented part formed by denting a part of an inner surface of the concaved groove,
wherein the ball circulation groove (22) comprises: both of the end parts connecting with the ball raceway; and an intermediate part between the both of the end parts, and
wherein an area of a cross-section of the lubricant reservoir cut along a plane perpendicular to a length direction of the ball circulation groove (22) is larger at a part adjacent to the intermediate part than a part adjacent to the end parts.

2. The ball screw according to claim 1, wherein the ball circulation groove is curved, and the lubricant reservoir arranged at an inside in the radial direction of the curve of ball circulation groove is larger in the area of the cross-section cut along a plane perpendicular to the length direction of the ball circulation groove than a lubricant reservoir arranged at an outside in the radial direction of the curved ball circulation groove.

3. The ball screw according to claim 1, wherein the concaved groove constituting the ball circulation groove and the dented part constituting the lubricant reservoir are formed simultaneously.

4. The ball screw according to claim 1, wherein an arithmetic average roughness Ra₂ of a surface of the ball circulation groove is greater than 0 µm to equal to or smaller than 1.6 µm.

5. The ball screw according to claim 4,
wherein a press method using a die (205) of a cam mechanism is performed, the cam mechanism comprising:
a cam driver inserted into a nut blank having a cylindrical shape and moving in an axial direction; and
a cam slider arranged between the nut blank and the cam driver and formed with a projecting part corresponding to the ball circulation groove, a movement of the cam driver causing the projecting part to move in a radial direction of the nut,
wherein an arithmetic average roughness Ra₁ of a surface of the projecting part is equal to or greater than 0.01 µm to equal to or smaller than 0.2 µm, so as to push against the inner circumferential surface of the nut blank by the projecting part and thereby to form the ball circulation groove having an arithmetic average roughness Ra₂ of greater than 0µm and equal to or less than 1.6µm in its surface at the inner circumferential surface of the nut blank.

6. The ball screw according to claim 1, wherein the ball circulation groove comprises a concaved groove formed by concaving a part of the inner circumferential surface of the nut (202), and
wherein a surface hardness of the threaded groove of the nut (202) is equal to or greater than HRC 58 to equal to or smaller than HRC 62, a surface hardness of the both of the end parts connecting with the ball raceway in the ball circulation groove is equal to or greater than HRC 58 to equal to or smaller than HRC 62, and a surface hardness of the intermediate part between both of the end parts in the ball circulation groove is equal to or smaller than HV 550,

7. The ball screw according to claim 1, wherein only both of the end parts in the ball circulation groove and the threaded groove (202a) of the nut (202) are subjected to induction heat treatment.

8. The ball screw according to claim 1, wherein the nut (202) is formed by deburring the boundary part of the ball circulation groove and the ball raceway by at least one of brushing and blasting.

9. The ball screw according to claim 1, wherein following three conditions A, B, and C are satisfied,
condition A: the ball circulation groove comprises a concaved groove formed by concaving a part of the inner circumferential surface of the nut (202),
condition B: the ball circulation groove comprises both of the end parts connecting with the ball raceway, an intermediate part arranged between the both of the end parts, and a curved part which connects the end parts and the intermediate parts, and has a substantially letter S shape, and
condition C: an edge part of the curved part in the edge part of the concaved groove is curved, and the edge part at the outside in the radial direction of the curve is formed in a shape in which a plurality of arcs different in radius of curvature are smoothly connected.

10. The ball screw according to claim 1, wherein the ball circulation groove comprises both of the end parts connecting with the ball raceway, and an intermediate part arranged between the both of the end parts, and
wherein a groove width of the intermediate part is narrower than a groove width of the end parts.

11. The ball screw according to claim 1, wherein following three conditions D, E, and F are satisfied,
condition D: the ball circulation groove comprises a concaved groove formed by concaving a part of the inner circumferential surface of the nut (202),
condition E: the ball circulation groove comprises both of the end parts connecting with the ball raceway, and two curved parts arranged between the both of the end parts and curved in opposite directions to each other, and has a substantially letter S shape, and
condition F: edge parts of the two curved parts in the edge part of the concaved groove are curved, and the edge part at the outside in the radial direction of the curve is formed in a shape in which a plurality of arcs different in radius of curvature are smoothly connected.

12. The ball screw according to claim 1, wherein following three conditions G, H, and I are satisfied,
condition G: the ball circulation groove comprises a concaved groove formed by concaving a part of the inner circumferential surface of the nut,
condition H: the ball circulation groove comprises both of the end parts connecting with the ball raceway, and two curved parts arranged between the both of the end parts and curved in opposite directions to each other, and forms a substantially letter S shape, and
condition I: edge parts of the two curved parts in the edge part of the concaved groove are curved and the edge part at the outside in the radial direction of the curve and the inside in the radial direction of the curve are formed in a single arc shape.

13. The ball screw according to claim 1, wherein the ball circulation groove comprises a concaved groove formed by concaving a part of the inner circumferential surface of the nut (202), and
wherein at least a part in the length direction of the ball circulation groove has a cross-sectional shape of a substantially letter V shape, when cut along a plane perpendicular to the length direction.

14. The ball screw according to claim 13, wherein the ball circulation groove comprises both of the end parts connecting with the ball raceway and an intermediate part between the both of the end parts, and
wherein at least one of the intermediate part and the end parts has a cross-sectional shape of a substantially letter V shape, when cut along a plane perpendicular to the length direction of the ball circulation groove.

15. The ball screw according to claim 13, wherein a bottom part of the concaved groove constituting the ball circulation groove is provided with a lubricant reservoir.

## Patentansprüche

1. Kugelspindel, umfassend:
eine Gewindewelle (201) mit einer spiralförmigen Gewindenut (201a) an einer Außenumfangsfläche;
eine Mutter (202) mit einer Gewindenut (202a), die der Gewindenut (201a) der Gewindewelle (201) an einer inneren Umfangsfläche zugewandt ist;
eine Mehrzahl von Kugeln (203), die drehbar in eine spiralförmige Kugellaufbahn geladen sind, die aus beiden Gewindenuten (201a, 202a) besteht; und
eine Kugelumlaufnut, welche die Kugeln (203) von einem Endpunkt zu einem Startpunkt der Kugellaufbahn zurückführt und zirkuliert;
wobei die Mutter (202) gebildet wird, indem ein Teil der inneren Umfangsfläche (202d) der Mutter konkaviert wird, um die Kugelumlaufnut zu bilden, die aus einer konkaven Nut besteht, und die Gewinderut (202a) in der inneren Umfangsfläche (202d) der Mutter gebildet wird, die mit einem Endteil der Kugelumlaufnut zu verbinden ist, und
wobei mindestens ein Teil eines Randabschnitts, der aus beiden Seitenflächen der Kugelumlaufnut und einer Fläche besteht, die sich von jeder der Seitenflächen fortsetzten und sich in axialer Richtung erstrecken, als abgerundet ausgebildet ist;
**dadurch gekennzeichnet, dass** die Kugelspindel ferner ein Schmiermittelreservoir umfasst, das ein Schmiermittel aufnehmen kann, und das Schmiermittelreservoir aus einem eingedrückten Teil besteht, der durch Einbeulen eines Teils einer Innenfläche der konkaven Nut gebildet wird;
wobei die Kugelumlaufnut (22) umfasst: beide Endteile, die mit der Kugellaufbahn verbunden sind; und ein Zwischenteil zwischen den beiden Endteilen und
wobei ein Bereich eines Querschnitts des Schmiermittelreservoirs, das entlang einer Ebene senkrecht zu einer Längsrichtung der Kugelumlaufnut (22) geschnitten ist, an einem Teil neben dem Zwischenteil größer ist als an einem Teil neben den Endteilen.

2. Kugelspindel nach Anspruch 1, wobei die Kugelumlaufnut gekrümmt ist und das Schmiermittelreservoir, das an einer Innenseite in radialer Richtung der Kurve der Kugelumlaufnut angeordnet ist, im Bereich der Kugelumlaufnut in dem Bereich des Querschnitts, der entlang einer Ebene senkrecht zur Längsrichtung der Kugelumlaufnut geschnitten ist, größer ist als ein Schmiermittelreservoir, das außen in radialer Richtung der gekrümmten Kugelumlaufnut angeordnet ist.

3. Kugelspindel nach Anspruch 1, wobei die konkave Nut, welche die Kugelumlaufnut bildet, und der eingedrückte Teil, der das Schmiermittelreservoir bildet, gleichzeitig ausgebildet sind.

4. Kugelspindel nach Anspruch 1, wobei eine arithmetische durchschnittliche Rauheit Ra₂ einer Oberfläche der Kugelumlaufnut größer als 0 µm bis gleich oder kleiner als 1,6 µm ist.

5. Kugelspindel nach Anspruch 4,
wobei ein Pressverfahren unter Verwendung einer Matrize (205) eines Nockenmechanismus durchgeführt wird, wobei der Nockenmechanismus umfasst:
einen Nockentreiber, der in einen Mutterrohling eingesetzt ist, der eine zylindrische Form hat und sich in axialer Richtung bewegt; und
einen Nockenschieber, der zwischen dem Mutterrohling und dem Nockentreiber angeordnet ist und mit einem vorspringenden Teil entsprechend der Kugelumlaufnut ausgebildet ist, wobei eine Bewegung des Nockentreibers bewirkt, dass sich der vorstehende Teil in einer radialen Richtung der Mutter bewegt;
wobei eine arithmetische durchschnittliche Rauheit Ra₁ einer Oberfläche des vorspringenden Teils gleich oder größer als 0,01 µm bis gleich oder kleiner als 0,2 µm ist, um gegen die innere Umfangsfläche des Mutterrohlings durch den vorspringenden Teil zu drücken und dadurch die Kugelumlaufnut mit einer arithmetischen mittleren Rauheit Ra₂ von mehr als 0 µm und gleich oder kleiner als 1,6 µm in ihrer Oberfläche an der inneren Umfangsfläche des Mutternrohlings zu bilden.

6. Kugelspindel nach Anspruch 1, wobei die Kugelumlaufnut eine konkave Nut umfasst, die durch Konkavieren eines Teils der inneren Umfangsfläche der Mutter (202) gebildet ist, und
wobei eine Oberflächenhärte der Gewindenut der Mutter (202) gleich oder größer als HRC 58 bis gleich oder kleiner als HRC 62 ist, eine Oberflächenhärte der beiden Endteile, die mit der Kugellaufbahn in der Kugelumlaufnut verbunden sind gleich oder größer als HRC 58 bis gleich oder kleiner als HRC 62 ist, und eine Oberflächenhärte des Zwischenteils zwischen beiden Endteilen in der Kugelumlaufnut gleich oder kleiner als HV 550 ist.

7. Kugelspindel nach Anspruch 1, wobei nur sowohl die Endteile in der Kugelumlaufnut als auch die Gewindenut (202a) der Mutter (202) einer Induktionswärmebehandlung unterzogen werden.

8. Kugelspindel nach Anspruch 1, wobei die Mutter (202) durch Entgraten des Begrenzungsteils der Kugelumlaufnut und der Kugellaufbahn durch mindestens eines von Bürsten und Strahlen gebildet wird.

9. Kugelspindel nach Anspruch 1, wobei die folgenden drei Bedingungen A, B und C erfüllt sind:
Bedingung A: Die Kugelumlaufnut umfasst eine konkave Nut, die durch Konkavieren eines Teils der inneren Umfangsfläche der Mutter (202) gebildet wird.
Bedingung B: Die Kugelumlaufnut umfasst beide Endteile, die mit der Kugellaufbahn verbunden sind, einen Zwischenteil, der zwischen den beiden Endteilen angeordnet ist, und einen gekrümmten Teil, der die Endteile und die Zwischenteile verbindet, und weist eine im wesentlichen Buchstabe S-Form auf, und
Bedingung C: Ein Randteil des gekrümmten Teils im Randteil der konkaven Nut ist gekrümmt, und der Randteil an der Außenseite in radialer Richtung der Kurve ist in einer Form ausgebildet, in der mehrere Bögen mit unterschiedlichem Krümmungsradius glatt verbunden sind.

10. Kugelspindel nach Anspruch 1, wobei die Kugelumlaufnut beide mit der Kugellaufbahn verbundenen Endteile und einen zwischen den beiden Endteilen angeordneten Zwischenteil umfasst und
wobei eine Nutenbreite des Zwischenteils schmaler ist als eine Nutenbreite der Endteile.

11. Kugelspindel nach Anspruch 1, wobei die folgenden drei Bedingungen D, E und F erfüllt sind:
Bedingung D: Die Kugelumlaufnut umfasst eine konkave Nut, die durch Konkavieren eines Teils der inneren Umfangsfläche der Mutter (202) gebildet wird.
Bedingung E: Die Kugelumlaufnut umfasst beide Endteile, die mit der Kugellaufbahn verbunden sind, und zwei gekrümmte Teile, die zwischen den beiden Endteilen angeordnet und in entgegengesetzte Richtungen zueinander gekrümmt sind, und weist eine im wesentlichen Buchstabe S-Form, und
Bedingung F: Randteile der beiden gekrümmten Teile in dem Randteil der konkaven Nut sind gekrümmt, und der Randteil an der Außenseite in radialer Richtung der Kurve ist in einer Form ausgebildet, in der mehrere Bögen mit unterschiedlichem Krümmungsradius glatt verbunden sind.

12. Kugelspindel nach Anspruch 1, wobei die folgenden drei Bedingungen G, H und I erfüllt sind:
Bedingung G: Die Kugelumlaufnut umfasst eine konkave Nut, die durch Konkavieren eines Teils der inneren Umfangsfläche der Mutter gebildet wird.
Bedingung H: Die Kugelumlaufnut umfasst beide Endteile, die mit der Kugellaufbahn verbunden sind, und zwei gekrümmte Teile, die zwischen den beiden Endteilen angeordnet und in entgegengesetzte Richtungen zueinander gekrümmt sind, und bildet im wesentlichen eine Buchstabe S-Form , und
Bedingung I: Randteile der beiden gekrümmten Teile im Randteil der konkaven Nut sind gekrümmt und der Randteil an der Außenseite in radialer Richtung der Kurve und an der Innenseite in radialer Richtung der Kurve sind in einer einzigen Bogenform ausgebildet.

13. Kugelspindel nach Anspruch 1, wobei die Kugelumlaufnut eine konkave Nut umfasst, die durch Konkavieren eines Teils der inneren Umfangsfläche der Mutter (202) gebildet ist, und
wobei mindestens ein Teil in Längsrichtung der Kugelumlaufnut eine Querschnittsform einer im wesentlichen Buchstaben V-Form aufweist, wenn er entlang einer Ebene senkrecht zur Längsrichtung geschnitten wird.

14. Kugelspindel nach Anspruch 13, wobei die Kugelumlaufnut sowohl die mit der Kugellaufbahn verbundenen Endteile als auch einen Zwischenteil zwischen den beiden Endteilen umfasst, und
wobei mindestens eines des Zwischenteils und der Endteile eine Querschnittsform mit einer im Wesentlichen Buchstaben V-Form aufweist, wenn es entlang einer Ebene senkrecht zur Längsrichtung der Kugelumlaufnut geschnitten wird.

15. Kugelspindel nach Anspruch 13, wobei ein unterer Teil der konkaven Nut, welche die Kugelumlaufnut bildet, mit einem Schmiermittelreservoir versehen ist.

## Revendications

1. Vis à billes comprenant :
un arbre fileté (201) ayant une rainure filetée en spirale (201a) au niveau d'une surface circonférentielle externe ;
un écrou (202) ayant une rainure filetée (202a) qui fait face à la rainure filetée (201a) de l'arbre fileté (201) au niveau d'une surface circonférentielle interne ;
une pluralité de billes (203) chargées de manière rotative dans un chemin de roulement à billes en spirale constitué par les deux rainures filetées (201a, 202a) ; et
une rainure de circulation de billes, qui renvoie et fait circuler les billes (203) d'un point final à un point de départ du chemin de roulement à billes,
dans laquelle l'écrou (202) est formé par le façonnage de manière concave d'une partie de la surface circonférentielle interne (202d) de l'écrou pour former la rainure de circulation de billes constituée par une rainure concave, et la formation de la rainure filetée (202a) dans la surface circonférentielle interne (202d) de l'écrou pour être raccordée avec une partie d'extrémité de la rainure de circulation de billes, et
dans laquelle au moins une partie d'une section de bord, constituée par les deux surfaces latérales de la rainure de circulation de billes et une surface qui continue à partir de chacune des surfaces latérales et qui s'étend dans une direction axiale, est formée pour être arrondie,
**caractérisé en ce que** la vis à billes comprend en outre un réservoir de lubrifiant qui peut contenir un lubrifiant et le réservoir de lubrifiant est constitué par une partie bosselée formée par le bosselage d'une partie d'une surface interne de la rainure concave,
dans laquelle la rainure de circulation de billes (22) comprend : les deux parties d'extrémité se raccordant au chemin de roulement à billes ; et une partie intermédiaire entre les deux parties d'extrémité, et
dans laquelle une aire d'une coupe transversale du réservoir de lubrifiant découpée le long d'un plan perpendiculaire à une direction de longueur de la rainure de circulation de billes (22) est plus grande au niveau d'une partie adjacente à la partie intermédiaire que d'une partie adjacente aux parties d'extrémité.

2. Vis à billes selon la revendication 1, dans laquelle la rainure de circulation de billes est incurvée, et le réservoir de lubrifiant agencé au niveau d'un intérieur dans la direction radiale de la courbure de la rainure de circulation de billes est plus grand dans l'aire de la coupe transversale découpée le long d'un plan perpendiculaire à la direction de longueur de la rainure de circulation de billes qu'un réservoir de lubrifiant agencé au niveau d'un extérieur dans la direction radiale de la rainure de circulation de billes incurvée.

3. Vis à billes selon la revendication 1, dans laquelle la rainure concave constituant la rainure de circulation de billes et la partie bosselée constituant le réservoir de lubrifiant sont formées simultanément.

4. Vis à billes selon la revendication 1, dans laquelle une rugosité moyenne arithmétique Ra₂ d'une surface de la rainure de circulation de billes est supérieure à 0 µm jusqu'à égale ou inférieure à 1,6 µm.

5. Vis à billes selon la revendication 4,
dans laquelle un procédé de pressage à l'aide d'une matrice (205) d'un mécanisme de came est réalisé, le mécanisme de came comprenant :
un entraîneur de came inséré dans une ébauche d'écrou ayant une géométrie cylindrique et se déplaçant dans une direction axiale ; et
un curseur de came agencé entre l'ébauche d'écrou et l'entraîneur de came et formé avec une partie en saillie correspondant à la rainure de circulation de billes, un mouvement de l'entraîneur de came amenant la partie en saillie à se déplacer dans une direction radiale de l'écrou,
dans laquelle une rugosité moyenne arithmétique Ra₁ d'une surface de la partie en saillie est égale ou supérieure à 0,01 µm jusqu'à égale ou inférieure à 0,2 µm, de façon à pousser contre la surface circonférentielle interne de l'ébauche d'écrou par la partie en saillie et pour former ainsi la rainure de circulation de billes ayant une rugosité moyenne arithmétique Ra₂ supérieure à 0 µm et égale ou inférieure à 1,6 µm dans sa surface au niveau de la surface circonférentielle interne de l'ébauche d'écrou.

6. Vis à billes selon la revendication 1, dans laquelle la rainure de circulation de billes comprend une rainure concave formée par le façonnage de manière concave d'une partie de la surface circonférentielle interne de l'écrou (202), et
dans laquelle une dureté de surface de la rainure filetée de l'écrou (202) est égale ou supérieure à 58 HRC jusqu'à égale ou inférieure à 62 HRC, une dureté de surface des deux parties d'extrémité se raccordant avec le chemin de roulement à billes dans la rainure de circulation de billes est égale ou supérieure à 58 HRC jusqu'à égale ou inférieure à 62 HRC, et une dureté de surface de la partie intermédiaire entre les deux parties d'extrémité dans la rainure de circulation de billes est égale ou inférieure à 550 HV.

7. Vis à billes selon la revendication 1, dans laquelle uniquement les deux parties d'extrémité dans la rainure de circulation de billes et la rainure filetée (202a) de l'écrou (202) sont soumises à un traitement thermique par induction.

8. Vis à billes selon la revendication 1, dans laquelle l'écrou (202) est formé par ébavurage de la partie de limite de la rainure de circulation de billes et du chemin de roulement à billes par au moins l'un parmi le brossage et le grenaillage.

9. Vis à billes selon la revendication 1, dans laquelle les trois conditions A, B et C suivantes sont satisfaites,
condition A : la rainure de circulation de billes comprend une rainure concave formée par le façonnage de manière concave d'une partie de la surface circonférentielle interne de l'écrou (202),
condition B : la rainure de circulation de billes comprend les deux parties d'extrémité se raccordant au chemin de roulement à billes, une partie intermédiaire agencée entre les deux parties d'extrémité, et une partie incurvée qui raccorde les parties d'extrémité et les parties intermédiaires, et possède une géométrie sensiblement en lettre S, et
condition C : une partie de bord de la partie incurvée dans la partie de bord de la rainure concave est incurvée, et la partie de bord au niveau de l'extérieur dans la direction radiale de la courbure est formée selon une géométrie dans laquelle une pluralité d'arcs de différents rayons de courbure sont raccordés de manière uniforme.

10. Vis à billes selon la revendication 1, dans laquelle la rainure de circulation de billes comprend les deux parties d'extrémité se raccordant au chemin de roulement à billes, et une partie intermédiaire agencée entre les deux parties d'extrémité, et
dans laquelle une largeur de rainure de la partie intermédiaire est plus étroite qu'une largeur de rainure des parties d'extrémité.

11. Vis à billes selon la revendication 1, dans laquelle les trois conditions D, E et F suivantes sont satisfaites,
condition D : la rainure de circulation de billes comprend une rainure concave formée par le façonnage de manière concave d'une partie de la surface circonférentielle interne de l'écrou (202),
condition E : la rainure de circulation de billes comprend les deux parties d'extrémité se raccordant au chemin de roulement à billes, et deux parties incurvées agencées entre les deux parties d'extrémité et incurvées dans des directions opposées l'une à l'autre, et possède une géométrie sensiblement en lettre S, et
condition F : des parties de bord des deux parties incurvées dans la partie de bord de la rainure concave sont incurvées, et la partie de bord au niveau de l'extérieur dans la direction radiale de la courbure est formée selon une géométrie dans laquelle une pluralité d'arcs de différents rayons de courbure sont raccordés de manière uniforme.

12. Vis à billes selon la revendication 1, dans laquelle les trois conditions G, H et I suivantes sont satisfaites,
condition G : la rainure de circulation de billes comprend une rainure concave formée par le façonnage de manière concave d'une partie de la surface circonférentielle interne de l'écrou,
condition H : la rainure de circulation de billes comprend les deux parties d'extrémité se raccordant au chemin de roulement à billes, et deux parties incurvées agencées entre les deux parties d'extrémité et incurvées dans des directions opposées l'une à l'autre, et forme une géométrie sensiblement en lettre S, et
condition I : des parties de bord des deux parties incurvées dans la partie de bord de la rainure concave sont incurvées et la partie de bord au niveau de l'extérieur dans la direction radiale de la courbure et de l'intérieur dans la direction radiale de la courbure sont formées selon une géométrie d'arc unique.

13. Vis à billes selon la revendication 1, dans laquelle la rainure de circulation de billes comprend une rainure concave formée par le façonnage de manière concave d'une partie de la surface circonférentielle interne de l'écrou (202), et
dans laquelle au moins une partie dans la direction de longueur de la rainure de circulation de billes possède une géométrie en coupe transversale d'une géométrie sensiblement en lettre V, lorsqu'elle est découpée le long d'un plan perpendiculaire à la direction de longueur.

14. Vis à billes selon la revendication 13, dans laquelle la rainure de circulation de billes comprend les deux parties d'extrémité se raccordant au chemin de roulement à billes, et une partie intermédiaire entre les deux parties d'extrémité, et
dans laquelle au moins l'une de la partie intermédiaire et des parties d'extrémité possède une géométrie en coupe transversale d'une géométrie sensiblement en lettre V, lorsqu'elle est découpée le long d'un plan perpendiculaire à la direction de longueur de la rainure de circulation de billes.

15. Vis à billes selon la revendication 13, dans laquelle une partie de fond de la rainure concave constituant la rainure de circulation de billes est munie d'un réservoir de lubrifiant.
